Europäisches Patentamt

European Patent Office

Office européen des brevets

(19)

(11) **EP 1 315 122 A2**

(12) **EUROPEAN PATENT APPLICATION**

(43) Date of publication:
**28.05.2003 Bulletin 2003/22**

(51) Int Cl.$^7$: **G06K 15/02**

(21) Application number: **02258035.1**

(22) Date of filing: **21.11.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **21.11.2001 JP 2001355517**

(71) Applicant: **Oki Data Corporation
Tokyo 108-8551 (JP)**

(72) Inventor: **Wakasugi, Nobuo
Minato-ku, Tokyo 108-8551 (JP)**

(74) Representative: **Read, Matthew Charles et al
Venner Shipley & Co.
20 Little Britain
London EC1A 7DH (GB)**

(54) **Graphical data processing**

(57)     Bitmapped graphics, font and vector form figure data are transformed to an internal gradation graphics data format in a printer by zooming means 1, font representing means 2 and vector representing means 3 and inputted to a figure conserving gradation pixel data generating means 11, where an average gradation value of plural gradation values is determined. A number of figure bits, representing a graphical figure, are associated with each gradation value. By appending these figure bits to the average gradation value, a figure conserving gradation pixel data which represents a pixel with high resolution is generated and can be used in controlling a graphic processor in accordance with the resolution of inputted graphics data, whether a pixel represents an edge of a figure, whether a user wishes to prioritise print quality or print speed or the memory capacity available to the graphic processor.

**Fig.1**

**Description**

BACKGROUND OF THE INVENTION

1. Field of the Invention

The present invention relates to a graphic processing method for increasing graphic quality in, for example, a colour printer and a graphic processor or processing system for performing this method.

2. Description of the Related Art

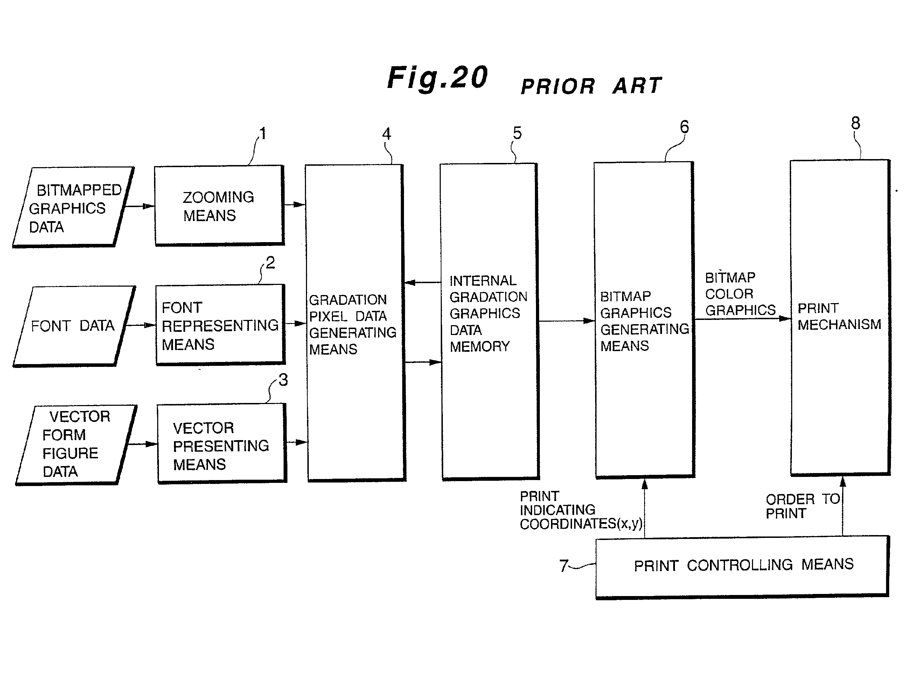

Fig. 20 is a block diagram showing the configuration of a graphic processor in a conventional colour printer. Generally, data sent to the printer comprises data of three different types: bitmap graphics data, such as photographs etc., font data for forming characters, and vector form data representing figures. These data are assembled on the same page using logical calculations for overlaying data so that they overlap on the page, painting a figure with half transparent paint etc. in accordance with a representing order. All three types of data need to be transformed into the same internal gradation graphics data format with the same resolution. Therefore, to begin with, bitmap graphics data is inputted to a zooming means 1 for transforming it to the resolution of internal gradation graphics in the printer. Font data is inputted to a font representing means 2. Vector form figure data is inputted to a vector representing means 3. Each of inputted data is transformed into the internal gradation graphics data form by each means respectively and inputted to a gradation pixel data generating means 4.

In this example, the gradation pixel data generating means 4 executes logical calculations based on a pixel gradation value stored in the gradation pixel data generating means 4 and the newly obtained gradation value according to a prescribed logical calculation code in order to generate gradation pixel data so as to perform graphic processing such as overlaying, painting with half transparent colour, inverting or deleting of colour, etc.

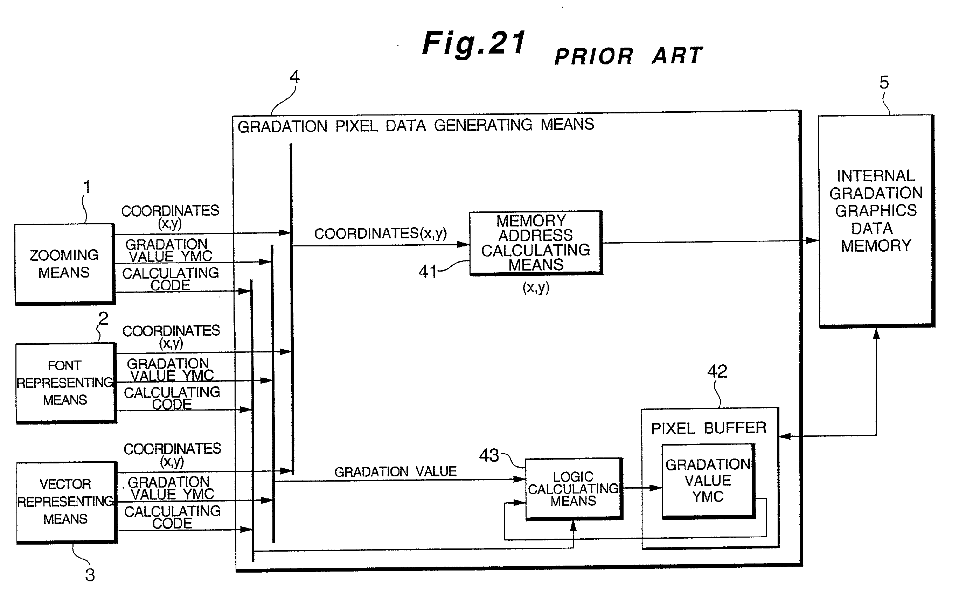

Fig. 21 is a block diagram showing the configuration of the gradation pixel data generating means 4. The gradation pixel data generating means 4 comprises a memory address calculating means 41 to calculate addresses in an internal gradation graphics memory 5, which are determined uniquely by input coordinates, a pixel buffer 42 to store pixel data and a logic calculating means 43 to perform logical calculations based on the gradation values inputted from the zooming means 1, font representing means 2 and vector representing means 3 and a pixel gradation value retrieved from the pixel buffer 42, according to an inputted logical calculation code. The gradation pixel data generating means 4 receives the coordinates (x,y), gradation value and logic calculation code in accordance with the representation order of the application document (not shown in the drawings).

The coordinates (x,y), gradation value and logic calculation code are inputted respectively from the zooming means 1, the font representing means 2, and the vector representing means 3 as shown in Fig. 21.

An operation where a figure is overlaid will now be described. With reference to Fig. 21, the internal gradation graphics data from zooming means 1 is stored in the internal gradation graphics data memory 5, having passed through the logical calculating means 43 and pixel buffer 42. The internal gradation graphics data from font representing means 2 is then laid over the internal gradation graphics data already stored in the internal gradation graphics data memory 5. At this time, the next operation is performed. Here, the calculating code is not through, but is OR logic. The logical calculation process will now be described.

A pixel gradation value is abstracted from pixel data (which makes up graphics data) stored in the internal gradation graphics memory 5 at the address corresponding to the coordinates inputted from font representing means 2. This gradation value is inputted to the pixel buffer 42. An OR logic calculation based on the inputted gradation value from font representing means 2 and the gradation value stored in pixel buffer 42 is performed by the logical calculating means 43. And, the pixel data obtained as a result of this calculation is written back to the pixel buffer 42. When the logic calculation is finished, the pixel data stored in pixel buffer 42 is written back to the internal gradation graphics memory at the address indicated by the input coordinates.

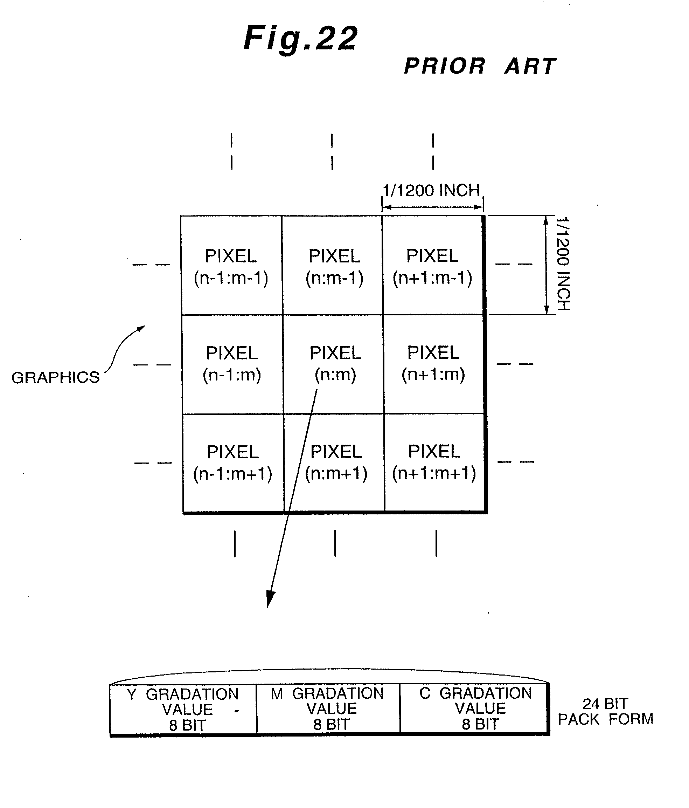

The general format of internal gradation pixel data in the conventional graphics processor is shown in Fig. 22 and comprises packed data of 24 bits consisting of 8 bits for each colour element, i.e. Y (yellow), M (magenta) and C (cyan). This provides 256 gradation levels for each colour element.

This internal gradation pixel data is transformed to bitmap colour graphics corresponding to the resolution of printer by bitmapping means 6, so as to be printed. The control of the printing operation is processed by print controlling means 7. The print controlling means 7 outputs printing coordinates to the bitmapping means 6. The bitmap data outputted from bitmapping means 6 is sent to a print mechanism 8. The print controlling means 7 performs printing indication to the print mechanism 8, so as to print the inputted bitmap data in an order according to the printing coordinates.

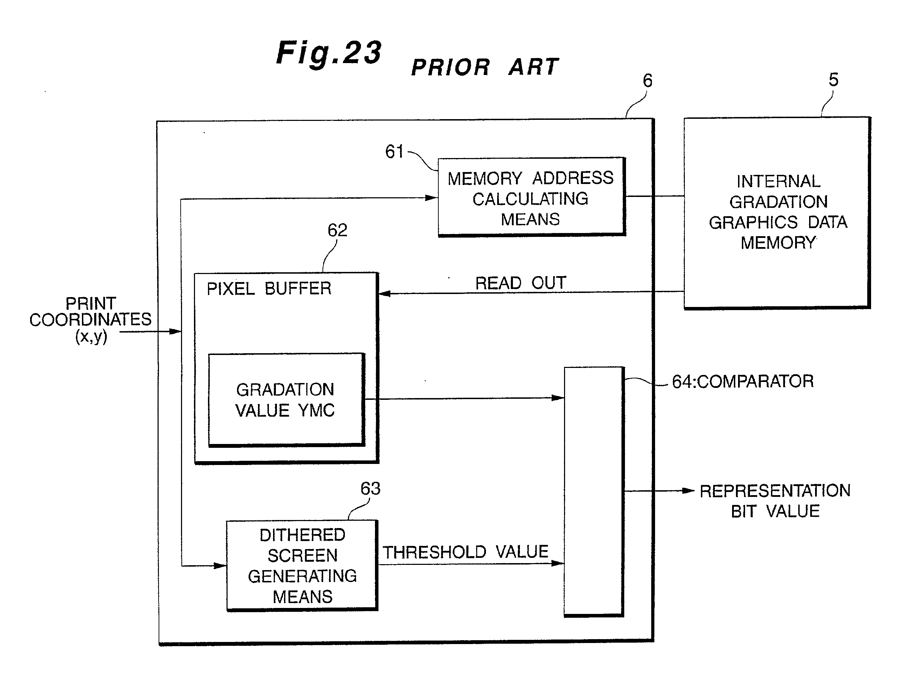

A method of transforming the gradation pixel data to the bitmap graphics using a dithered screen will now be described, with reference to Fig. 23. Fig. 23 is a block diagram showing the configuration of bitmapping means 6. The bitmapping means 6 comprises a memory address calculating means 61 for calculating an address of the internal gradation graphics memory 5, which is uniquely determined by the inputted coordinates, a pixel buffer 62 for storing the gradation value extracted from the gradation pixel data of the inputted graphics data from internal gradation graphics memory 5, a dithered screen generating means 63 for generating a threshold value corresponding to this inputted coordinates value and a comparator 64 for generating a representation bit value from the inputted gradation value from pixel buffer 62 and the inputted threshold value from dithered screen generating means 63.

1) When a pair of print coordinates (x,y) is inputted to the bitmapping means 6 from the print controlling means 7, an address of the internal gradation graphics memory 5 corresponding to the coordinates (x,y) is calculated by the memory address calculating means 61. The pixel data of graphics data in the internal gradation graphics memory 5 corresponding to this address is read, so as to extract the gradation value from this pixel data. This gradation value is read into the pixel buffer 62.
2) The print coordinates (x,y) are also inputted to the dithered screen generating means 63, so as to generate the threshold value corresponding to this coordinates value.
3) Each yellow (Y), magenta (M) and cyan (C) colour element gradation values read from the pixel buffer 62 and the corresponding threshold value generated by the dithered screen generating means 63 are inputted to the comparator 64. Then, if the gradation value of pixel buffer 62 is more than or equal to the threshold value, a representation bit value "1" is output by the comparator 64. If the gradation value of pixel buffer 62 is less than the threshold value, representation bit value "0" is output by the comparator 64.

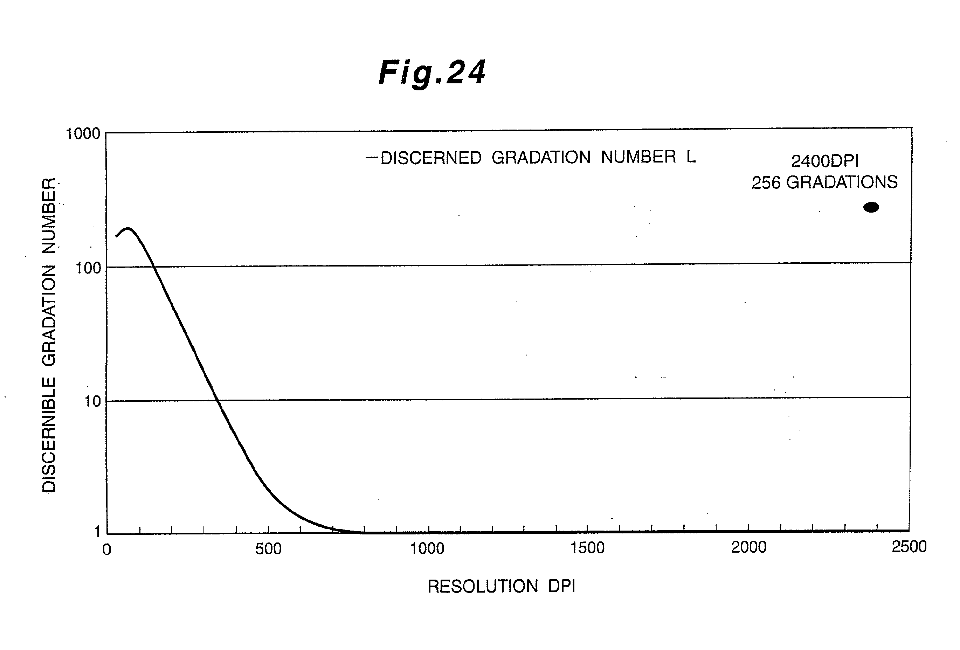

By this method, gradation graphics are transformed into bitmap graphics for printing.
Demand for printers with higher graphic quality, comparable to that achieved in photography, has arisen as colour printing techniques. For example, the gradation number is to be improved to 24 bits and the gradation is to be improved to 1200DPI (Dot Per Inch), or 2400DPI so as to smooth the edges of letters.
However, 1.5 Gbytes of memory capacity is needed for representing one page of A4 size sheet when an internal gradation data format of 256 gradation 1200DPI is adopted. As a result, the cost of providing the memory increases sharply. Adding to this, the speed of printing is reduced as a large quantity of graphics data is processed in printing.
However, as a characteristic of the sense of human sight, human eyes are sensitive to the gradation of graphics when the graphic density is low but this sensitivity drops gradually as the graphic density increases. It is known that it reaches to bitmap level as the graphic density reaches about 600DPI. Fig. 24 is a graph showing the relationship between the resolution and the discernible gradation number for a viewer at a distance of 30 centimetres. A point representing 256 gradation 2400DPI is plotted on this graph and it is shown that this point is far from the sensitivity of human eyes and the data is prolix.

SUMMARY OF THE INVENTION

Therefore, the present invention is made in consideration of the problems included in the related art mentioned above. It is aimed at providing a graphic processing method and a graphic processor or processing system which is capable of producing high graphic quality without requiring increased memory capacity or reducing printing performance. This is achieved by generating internal gradation graphics data which is composed of high resolution data with low gradation and low resolution data with high gradation, in consideration of the sensitivity of human sight.
According to a first aspect of the present invention, a method for processing graphics comprises a process of dividing bitmap graphics to be printed into groups of plural bits and determining colouring for each of the groups of bits and another process of painting each bit with the determined colour.
According to a second aspect of the present invention, a graphic processor for processing presentation of bitmap graphics comprises a gradation data generating section, a figure data generating section and a figure conserving graphics data memory, the graphic data generating section comprising a coordinates transforming means and a gradation value register, wherein a pointed region including plural first gradation data with first positioning data is read out of inputted graphics data and second gradation data is generated from the plural first gradation data in the read out painted region. The figure data generating section comprises a coordinates transforming means and a figure data buffer, in which figure data consisting of bits are generated corresponding to the relative coordinates in pointed region by comparing the first gradation data with a reference gradation data which represents, for example, a white colour, and the figure conserving gradation graphics data memory stores the second gradation data and figure data of each pointed region.
The invention also provides a system of graphic processing comprises a processor , a memory and a graphic processing means, wherein the processor executes a graphic controlling program which is stored in the memory. The graphic processing means processes the method described above, which is processed by, for example, the graphic processor ed above. In addition, the processor selects an optimum number of bits in each region according to the program.

Since the invention relates to a method of dividing graphics into regions, wherein each of the regions is assigned a certain colour according to the value of each bits in each region and painted accordingly, an increase in memory capacity is not required, and the processing speed does not fall while high quality graphic processing is achieved.

BRIEF DESCRIPTION OF THE DRAWINGS

Embodiments of the invention will now be described with reference to the accompanying drawings, in which:

Fig. 1 is a block diagram showing the configuration of a graphic processor according to a first embodiment of the invention;
Fig. 2 is a diagram showing the format of figure conserving gradation pixel data generated by the graphic processor of Fig. 1;
Fig. 3 is a block diagram showing the configuration of figure conserving gradation pixel data generating means in the graphic processor of Fig. 1;
Fig. 4 is a block diagram showing the configuration of figure conserving bitmapping means in the graphic processor of Fig. 1;
Fig. 5 is a block diagram showing the configuration of a figure conserving bitmapping means in a graphic processor according to a second embodiment of the invention;
Fig.s 6(a)-6(d) show a dithered screen pattern, figure conserving gradation pixel data and bitmap graphics produced by graphic processors according to the first and second embodiments of the invention;
Fig. 7 is a block diagram showing a configuration of figure conserving bitmapping means in a graphic processor according to a third embodiment of the invention;
Fig. 8 is a block diagram showing the configuration of figure conserving bitmapping means in a graphic processor according to a fourth embodiment of the invention;
Fig. 9 is a block diagram showing the configuration of figure conserving bitmapping means 17 in a graphic processor according to a fifth embodiment of the invention;
Fig. 10 is a block diagram showing the configuration of a graphic processor according to a sixth embodiment of the invention;
Fig. 11 is a block diagram showing the configuration of the figure conserving gradation pixel data generating means in the graphic processor of Fig. 10;
Fig. 12 is a block diagram showing the configuration of figure conserving bitmapping means in the graphic processor of Fig. 10;
Fig. 13 is a diagram showing the format of figure conserving gradation pixel data with decreased gradation representing resolution;
Fig. 14 is a block diagram showing the configuration of a graphic processor according to a seventh embodiment of the invention;
Fig. 15 is a block diagram showing the configuration of the figure conserving gradation pixel data generating means in the graphic processor of Fig. 14;
Fig. 16 is a block diagram showing the configuration of the figure conserving bitmapping means in the graphic processor of Fig. 14;
Fig. 17 is a block diagram showing the configuration of a graphic processor according to an eighth embodiment of the invention;
Fig. 18 is a flowchart showing the operation of the graphic processing system of Fig. 17;
Fig. 19 is a flowchart showing the operation of a graphic processing system according to a ninth embodiment of the invention;
Fig. 20 is a block diagram showing the configuration of a conventional graphic processor;
Fig. 21 is a block diagram showing the configuration of conventional gradation pixel data generating means;
Fig. 22 is a diagram showing the format of gradation pixel data generated by the conventional graphic processor of Figure 20;
Fig. 23 is a block diagram showing the configuration of a conventional bitmapping means;
Fig. 24 is a graph showing the relationship between resolution and discernible gradation number of a viewer at a distance of 30 centimetres.

DETAILED DESCRIPTION OF THE PREFERRED EMBODIMENTS

In this description, each element corresponding to an element used in the conventional device of Fig.s 21 to 23 is designated using the same reference symbol.

<Embodiment 1>

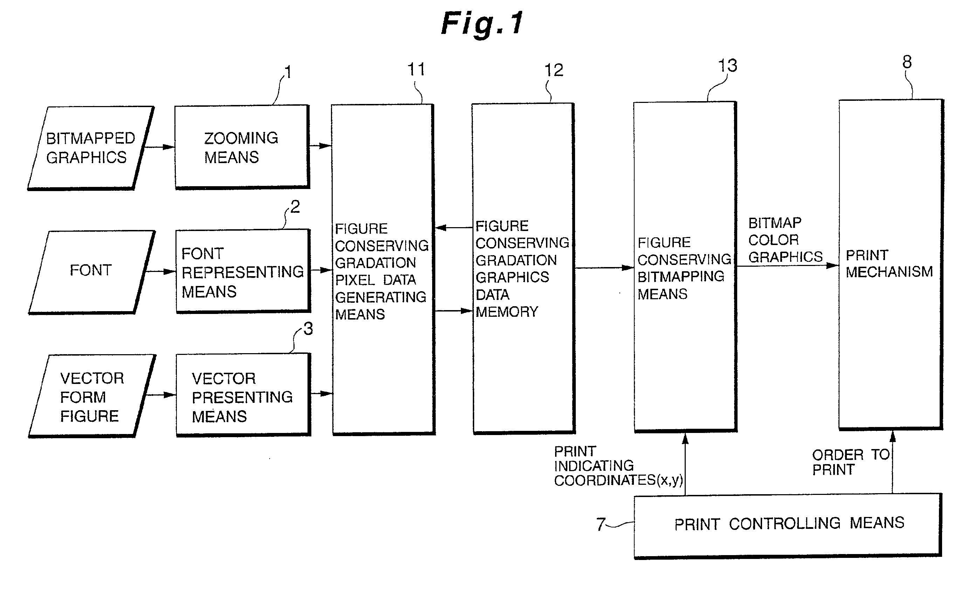

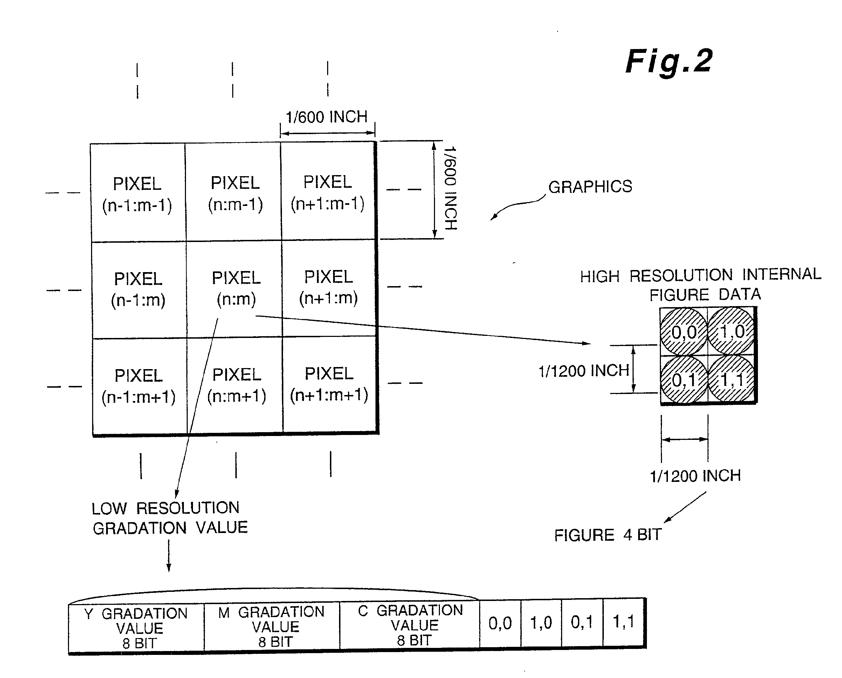

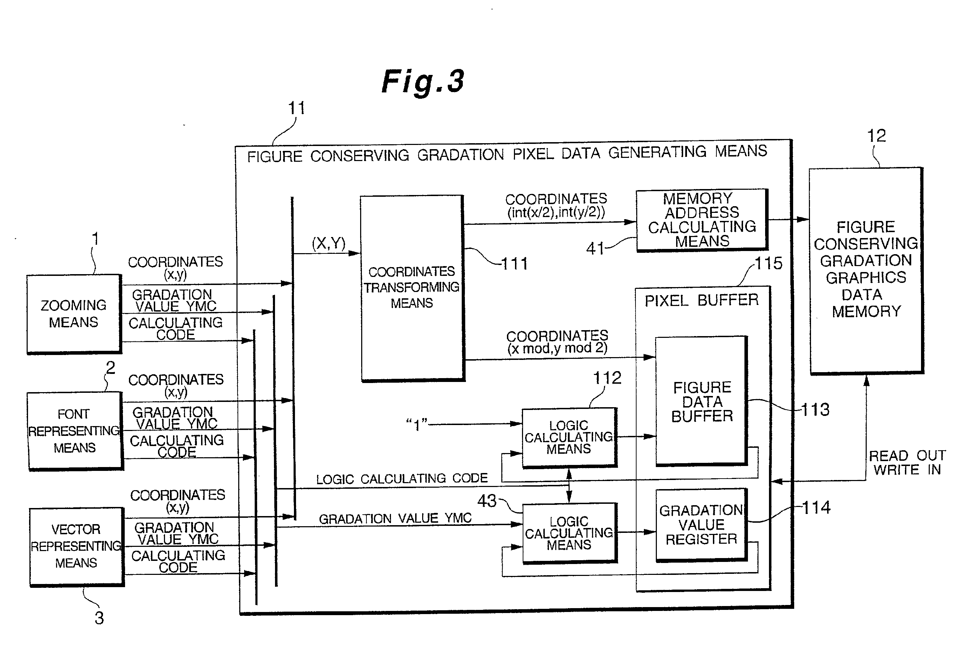

Fig. 1 is a block diagram which shows the outline configuration of a graphic processor according to a first embodiment of the invention. The graphic processor comprises a zooming means 1, a font representing means 2, a vector representing means 3, a figure conserving gradation pixel data generating means 11, a figure conserving gradation graphics data memory 12, a figure conserving bitmapping means 13, a print controlling means 7 and a print mechanism 8.
The zooming means 1 is a means for transforming bitmapped graphics into an internal gradation graphics data format of a printer.
The font representing means 2 is a means for transforming a font into the internal gradation graphics data format of the printer.
The representing means 3 is a means for transforming a vector form figure into the internal gradation graphics data format of the printer.
The figure conserving gradation pixel data generating means 11 is a means for generating pixel data corresponding to data inputted by the zooming means 1, the font representing means 2 or the vector representing means 3. This pixel data is composed of the conventional gradation value plus figure bits and, hereafter, is referred to as figure conserving gradation pixel data.
The figure conserving gradation graphics data memory 12 stores graphics data composed of the generated figure conserving gradation pixel data.
The figure conserving bitmapping means 13 processes bitmapping of the figure conserving gradation pixel data.
The print controlling means 7 controls the printing of graphics.
The print mechanism 8 performs the printing process.
In the graphic processor of Fig. 1, two classes of data are used. One of them is a class of gradation representing resolution which has low density and high gradation. The other is a class of figure representing resolution which has high density and low gradation. With these classes of data, optimum graphics data is obtained corresponding to the characteristics of human vision. The latter class of figure representing resolution H(DPI) is made up of 1 gradation data. And, the former class of gradation representing resolution L(DPI) is made up of M gradation data. In this embodiment, figure conserving gradation graphics data is generated by compiling both classes of data. In this embodiment, the data of figure representing resolution H usually determines the printing resolution of a printer.
In this embodiment, the figure representing resolution class adopts a resolution of 1200 DPI and 2 gradation and, the gradation representing resolution class adopts a resolution of 600 DPI and 256 gradation. However, these are examples of suitable parameters and the invention is not limited to embodiments using these specific values.
The format of the figure conserving gradation pixel data will now be described. As shown in Fig. The 2, the figure conserving gradation graphics data is composed of a figure conserving gradation pixel data for pixels of 1/600 square inch (0.25 mm$^2$) when the resolution of the printer is 1200 DPI. A figure conserving gradation pixel data is composed of 600 DPI gradation value and 1200 DPI figure bits. A figure conserving gradation pixel data positioned at coordinates (n,m) is made up of a packed data of 28 bits, of which 24 bits are used for 256 gradation colours of yellow (Y), magenta (M) and cyanine (C) with a density of 600 DPI and the remaining 4 bits are used for 1200 DPI figure data in each pixel with 2 gradation. In Fig. 2, relative coordinates are written in each dot of figure bits which comprise a unit pixel.
Next, a method of generating the figure conserving gradation pixel data is described. The figure conserving gradation pixel data is generated by the figure conserving gradatin pixel data generating means 11. Fig. 3 is a block diagram showing the configuration of the figure conserving gradation pixel data generating means 11. As shown in Fig. 3, the figure conserving gradation pixel data generating means 11 differs from the conventional gradation pixel data generating means 4 shown in Fig. 21 by further comprising a coordinates transforming means 111 and a second logic calculating means 112 in addition to logic calculating means 43. Furthermore, in place of pixel buffer 42, a pixel buffer 115 comprising a figure data buffer 113 and a gradation value register 114 is provided.
Hereinafter, a process of generating the figure conserving gradation pixel data is described.

1) As shown in Fig. 1, bitmapped graphics, font and vector form figure data are transformed into 1200 DPI gradation graphics data of printer resolution by the zooming means 1, font representing means 2 and vector representing means 3. The graphics data is inputted into the figure conserving gradation pixel data generating means 11. In this example, each pixel data included in the inputted graphics data comprises coordinates (x,y) with units of 1/1200 inch (1/3048 cm), a gradation value of the pixel and a certain calculating code.

2) The inputted coordinates (x,y) are transformed to coordinates (int(x/2), int(y/2)) of 600DPI unit gradation representing resolution and coordinates (x mod 2, y mod 2) of 1200 DPI unit figure representing resolution. Thus, the data stream is divided into 2 branches by the coordinates transforming means 111.

3) Memory address calculating means 41 calculate an address in the figure conserving gradation graphics data memory 12 corresponding to the coordinates (int.(x/2), int(y/2)) of 600DPI unit gradation representing resolution. And, a pixel data included in the graphics data (corresponding to the resolution of printing mechanism 8), which is already drawn, is read out from the calculated address in the figure conserving gradation graphics data memory 12. The read out pixel has a format shown in Fig. 2. It comprises figure bits and gradation values. The figure bits are stored in the figure data buffer 113 and the gradation value is stored in the gradation value register 114 of the pixel buffer 115.

4) A bit corresponding to coordinates (x mod 2, y mod 2) among the four figure bits which are stored in the figure data buffer 113 by the above mentioned process is read out and inputted to the logic calculating means 112. In the logic calculating means 112, a logic calculation based on the bit read out from the figure data buffer 113 and a prescribed inputted value "1" is processed according to a prescribed logic calculating code.

5) The contents of the gradation value register 114 are inputted to the logic calculating means 43 simultaneously with the process of step 4. The logic calculating means 43 processes a logic calculation based on the data from gradation value register 114 and the Y, M and C gradation values inputted from zooming means 1, font representing means 2 and vector representing means 3 according to a prescribed calculating code.

An example of the output of gradation value and its calculating process follows.

As shown in Fig. 2, the gradation values of each colour of each pixel at the following coordinates are inputted when m=0 and n=0.

$$\text{coordinates } (n, m) = (Y00, M00, C00)$$

$$\text{coordinates } (n, m+1) = (Y01, M01, C01)$$

$$\text{coordinates } (n+1, m) = (Y10, M10, C10)$$

$$\text{coordinates } (n+1, m+1) = (Y11, M11, C11)$$

Gradation values (Yg, Mg, Cg) are calculated from the average of the gradation values of each colour element Y, M, C as follows.

$$Yg = (Y00 + Y01 + Y10 + Y11)/4$$

$$Mg = (M00 + M01 + M10 + M11) / 4$$

$$Cg = (C00 + C01 + C10 + CY11) /4$$

Next, an example of the output of figure data is described.

The figure data is calculated from the relation between the gradation values (Yg, Mg, Cg) and the gradation values of each colour Y, M, C at each coordinate position as follows.

$$\text{if } (Y00 - Yg) + (M100 - Mg) + (C00 - Cg) \geqq 0 \text{ then } F00 = 1$$

$$\text{if } (Y00 - Yg) + (M00 - Mg) + (C00 - Cg) < 0 \text{ then } F00 = 0$$

$$\text{if } (Y01 - Yg) + (M01 - Mg) + (C01 - Cg) \geqq 0 \text{ then } F01 = 1$$

if (Y01 - Yg) + (M01- Mg) + (C01- Cg) < 0 then F01 = 0

if (Y10-Yg)+(M10-Mg)+(C10-Cg) $\geqq$ 0 then F10 = 1

if (Y10-Yg) + (M10 - Mg)+(C10-Cg) < 0 then F10 = 0

if (Y11 - Yg) + (M11 - Mg) + (C11 - Cg) $\geqq$ 0 then F11 = 1

if (Y11 - Yg) + (M11 - Mg) + (C11 - Cg) < 0 then F11 = 0

In this calculation, the figure data F00, F01, F10 and F11 correspond to the coordinates in Fig. 2 as follows.
   (0, 0) = F00
   (1, 0) = F10
   (0, 1) = F01
   (1, 1) = F11

6) Next, the output (a figure bit) of logic calculating means 112 is inputted into the bit corresponding to coordinates (x mod 2, y mod 2) in the figure data buffer 113. At the same time, the output (gradation value) of logic calculating means 43 is put in the gradation value register 114.

7) After these processes, a figure conserving gradation pixel data which comprises figure bits and gradation value is generated. And, this bit of figure conserving gradation pixel data is written at the above calculated address in figure conservation gradation graphics data memory 12.

In this example, the figure conserving gradation pixel data is bitmap data comprising more than 1 bit. 1 bit of binary digit is sufficient for processing monochrome graphics. Instead, for colour graphics, the figure conserving gradation pixel data is comprised of 8 bits for each colour element Y, M and C as shown in Fig. 2.

Next, a method of transforming the figure conserving gradation pixel data into bitmap graphics is described. The figure conserving gradation pixel data is transformed into bitmap graphics by figure conserving bitmapping means 13. In this occasion, a dithered screen method is adopted.

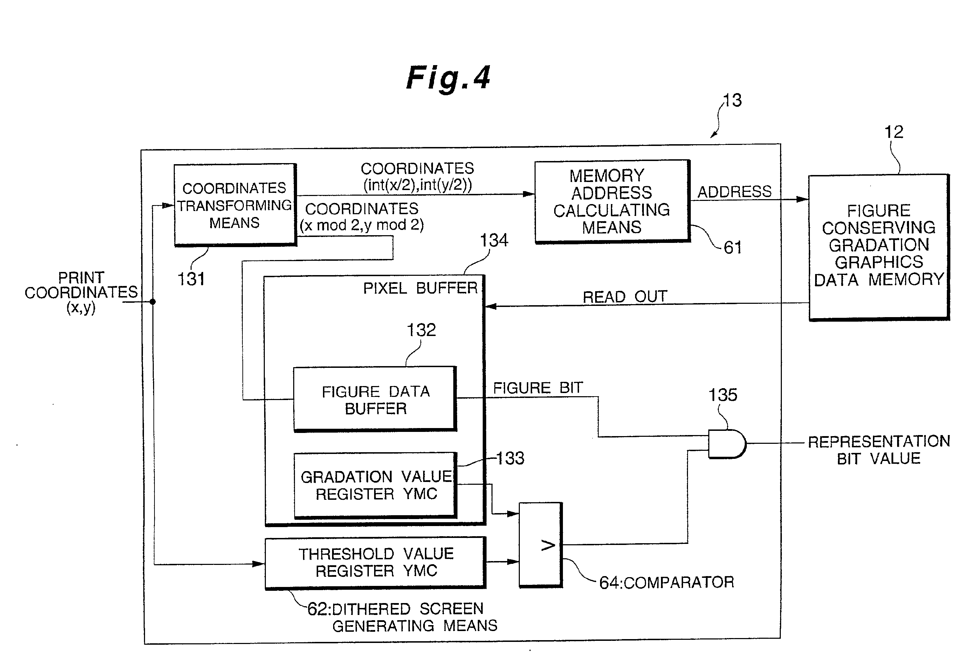

Fig. 4 is a block diagram showing the configuration of the figure conserving bitmapping means 13. As shown in Fig. 4, the figure conserving bitmapping means 13 comprises the same components as the conventional bitmapping means 6 of Figure 23, with the addition of a coordinates transforming means 131. Furthermore, instead of the pixel buffer 62 of the conventional bitmapping means 6, a pixel buffer 134 is provided which comprises a figure data buffer 132 and a gradation value register 133 and is configured to combine each output of the figure data buffer 132 and comparator 64 using an AND gate 135 so as to obtain a representation bit value.

Hereinafter, the processes of transforming figure conserving gradation pixel data into bitmap graphics are described.

1) As shown in Fig. 4, print coordinates (x,y) are inputted from the print controlling means 7 and transformed into coordinates (int (x/2), int (y/2)) of gradation representing resolution and coordinates (x mod 2, y mod 2) of figure representing resolution by the coordinates transforming means 131.

2) Next, an address in the figure conserving gradation graphics data memory 12 corresponding to the coordinates (int(x/2), int(y/2)) of gradation representing resolution is calculated by the memory address calculating means 61. The pixel data which is stored at the calculated address in figure the conserving gradation graphics data memory 12 is read out. The figure bits of the pixel data is stored in the figure data buffer 132 and the gradation value of it is stored in the gradation value register 133.

3) On the other hand, the dithered screen generating means 62 outputs a threshold value corresponding to print coordinates (x,y), when it is inputted with the coordinates.

4) The comparator 64 is inputted with the threshold value and the output value from the gradation value register 133 of pixel buffer 134. If the output value of gradation value register 133 is more than, or equal, to the threshold value, the comparator output is "1". Otherwise, the comparator output is "0".

5) When a signal "1" is output by the comparator 64, a representation bit value "1" is output from AND gate 135. On the other hand, when a signal "0" is output from the comparator 64, a representation bit value "0" is output from AND gate 135. This representation bit value is sent as bitmap graphics data to the print mechanism 8, so as to process printing.

The graphic processor of Embodiment 1 is able to cut down the quantity of internal intermediate graphics data of printer to less than 1/4 compared to the conventional processor. The conventional device holds the gradation pixel data of printing resolution as it is, while the graphic processor of the first embodiment generates and uses figure conserving gradation pixel data and can include the figure bits in gradation pixel data of low resolution, which is lower than printing resolution, so as to increase resolution at the edges of letters, symbols etc. For example, if the invention is used with a 1200DPI resolution class printer, it can cut down the gradation pixel data to an amount of 400 MBytes per page, whereas data of 1.5 GBytes per page is required in a conventional processor. Thus, the cost for memory is cut down. Moreover, the processor according to the first embodiment is able to contribute greatly to increasing the printing speed so that it is more than 4 times faster than a conventional device, because graphic data quantity is reduced by a factor greater than 4.

<Embodiment 2>

In the figure conserving bitmapping means 13 shown in Fig. 4, the resolution at the edges of letters, symbols etc. would be expected to increase with the figure bits. However, some dots are likely to drop at these edges as a result of coming out the pattern of dithered screen at the edge portions when the density becomes a little thinner owing to the screen bit configuration of dithered screen used by the figure conserving bitmapping means 13.

To avoid this defect, in a second embodiment of the invention, a graphic processor is further equipped with means for determining whether data relates to an edge or not by looking at the figure bits in advance, so as to be able to print smooth edges of a figure.

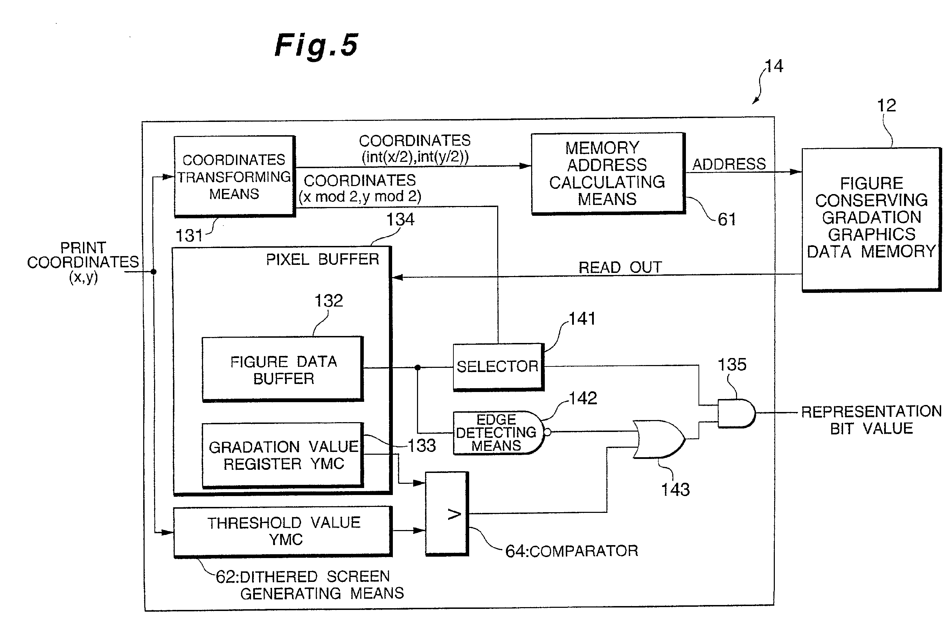

Fig. 5 is a block diagram showing the configuration of figure conserving bitmapping means 14 of a graphic processor according to the second embodiment. The figure conserving bitmapping means 14 is equipped with three new elements in addition to the elements of the figure conserving bitmapping means 13 of Figure 4: namely a selector 141, which selects input or output of the figure data buffer 132, an edge detecting means 142, which comprises a NAND logic circuit for determining whether or not data relates to the edge of a figure and an OR gate 143 which receives an output from the edge detecting means 142 and the output of comparator 64. The output of the OR gate 143 is fed to an input terminal of the AND gate 135.

A process for transforming figure conserving gradation pixel data into bitmap graphics performed by the figure conserving bitmapping means 14, where the figure conserving gradation pixel data is generated as in the first embodiment, is as follows:

1) As shown in Fig. 5, print coordinates (x,y) are inputted from the print controlling means 7 and transformed into coordinates (int(x/2), int(y/2)) of gradation representing resolution and coordinates (x mod 2, y mod 2) of figure representing resolution by the coordinates transforming means 131.

2) Next, memory calculating means 61 calculate an address in the figure conserving gradation graphics data memory 12 corresponding to the coordinates (int(x/2), int(y/2)) of gradation representing resolution.

Pixel data, which is stored at the address in figure conserving gradation graphics data memory 12 is read out and the figure bits stored in the figure data buffer 132 of pixel buffer 134. The gradation value of the pixel data is stored in the gradation value register 133 of pixel buffer 134.

3) On the other hand, in dithered screen generating means 63, the threshold value corresponding to print coordinates (x,y) is output when the coordinates (x,y) is inputted.

4) The threshold value and an output value from gradation value register 133 of pixel buffer 134 are inputted to comparator 64. If the output value of gradation value register 133 is more than, or equal to, the threshold value, the comparator 64 outputs a value "1". Otherwise, the output has a value "0".

5) The output of comparator 64 and the output of figure data buffer 132 are added logically by AND gate 135. The output value of AND gate 135 is output as bitmap graphics data to the print mechanism 8 for printing.

6) But, if the edge detecting means 142 has confirmed the presence of an edge in figure bits given, i.e. if edge detecting means 142 has confirmed the existence of "0" within the bits stored in figure data buffer 132, the edge detecting means 142 determines that the figure bits include an edge and produces an output of value "1". When the output value of the edge detecting means 142 is "1", the representation bit value output by the AND gate 135 is also "1". By these processes, edges of figures are always represented in good shape with a smooth outline.

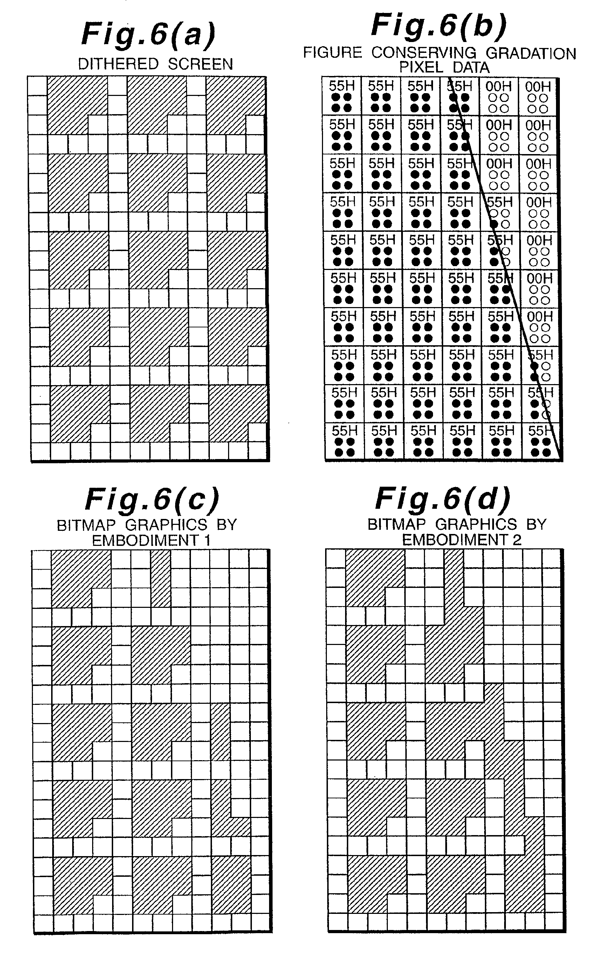

Fig. 6(a) shows a dithered screen pattern and Fig. 6(b) shows figure conserving gradation pixel data resulting from the drawing of a trapezoid. Fig. 6(c) shows graphics outputted by the graphic processor of the first embodiment. Fig. 6(d) shows graphics outputted by the graphic processor of the second embodiment in order to show the difference between bitmap graphics outputted by graphic processors according to the first and second embodiments.

In Fig. 6(b), each box of figure conserving gradation pixel data represents a pixel. The number in each box represents a gradation value. 55H and 00H are represented in Fig. 6(b). These are represented using an 8 bit format for monochrome graphics, however 24 bit formats could be adopted for colour printing. Four circles in each box represent a figure data. Here, black circles represent "1" and white circles represent "0". The graphic processors of the first and second embodiments output graphics using a dithered pattern and the figure conserving gradation pixel data.

The bitmap graphics output by the graphic processor of the first embodiment (Fig. 6(c)) is discontinuous at the edge portion of the figure owing to the dithered pattern. But, the bitmap graphics according to the graphic processor of the second embodiment (Fig. 6(d)) is continuous at the edge portion to improve the shape with a smooth outline. On the other hand, the gradation shown in Fig. 6(c) is retained inside of the edge portion of figure as shown in Fig. 6(d).

<Embodiment 3>

Although the processor of the second embodiment is effective at bringing up gradation at edge portions of figures so as to produce a smooth outline, it has a drawback in that the colour of the outline portion of figure stands out in contrast with the colour of the inside part of figure. Therefore, in a third embodiment, a graphic processor is provided which is able to selectively emphasise the outline of figure.

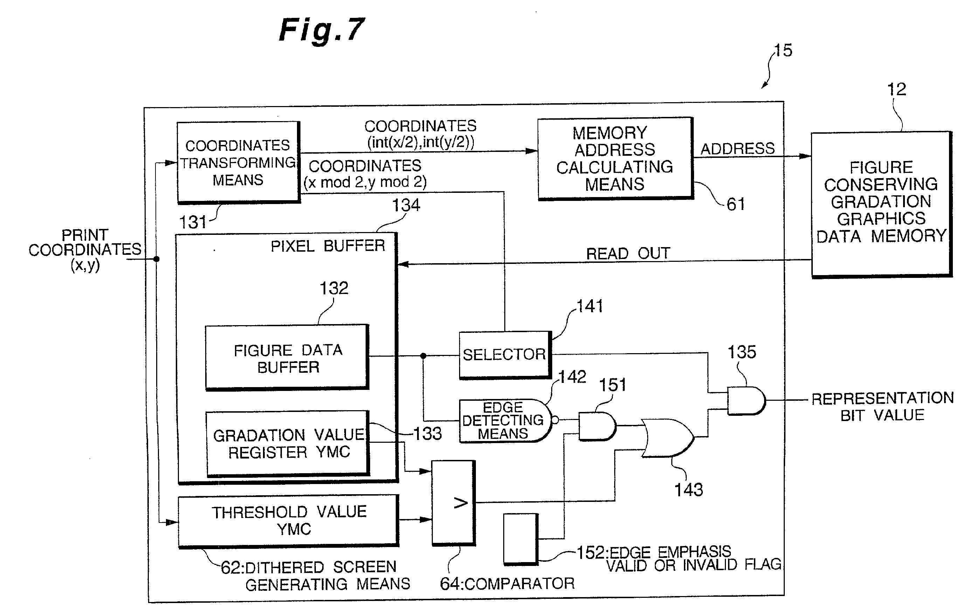

Fig. 7 is a block diagram showing the configuration of a figure conserving bitmapping means 15 of a graphic processor according to a third embodiment of the invention. The figure conserving bitmapping means 15 resembles the figure conserving bitmapping means 14 of Figure 5 but further comprises a second AND gate 151 and edge emphasis flag means 152. One input terminal of the second AND gate 151 is connected to the output terminal of edge detecting means 142 and the other input terminal is connected with the output terminal of edge emphasis flag means 152. The output of AND gate 151 is connected to one input terminal of the OR gate 143. In addition, data can be written to the edge emphasis flag means 152 by a processor not shown in the drawings.

A process for transforming figure conserving gradation graphics data into bitmap graphics using the figure conserving bitmapping means 15 will now be described, where the figure conserving gradation pixel data is generated as in the first embodiment.

1) As shown in Fig. 7, print coordinates (x,y) are inputted from the print controlling means 7 and transformed into two pairs of coordinates by the coordinates transforming means 131. One is a pair of coordinates (int(x/2), int(y/2)) of gradation representing resolution, while the other is a pair of coordinates (x mod 2, y mod 2) of figure representing resolution.

2) Next, an address in the figure conserving gradation graphics data memory 12 corresponding to coordinates (int(x/2), int(y/2)) of gradation representing resolution is calculated by the memory address calculating means 61. Pixel data stored in the figure conserving gradation graphics data memory 12 at the calculated address is read out and divided into figure bits and gradation value bits. The former is stored in figure data buffer 132 of pixel buffer 134. The latter is stored in gradation value register 133 of pixel buffer 134.

3) On the other hand, in dithered screen generating means 63, a threshold value corresponding to print coordinates (x,y) is output when the coordinates (x,y) is inputted.

4) The threshold value and the output value from gradation value register 133 of pixel buffer 134 are inputted to comparator 64. If the output value from the gradation value register 133 is more than, or equal to the threshold value, the comparator output is "1". Otherwise, the comparator output is "0".

5) The edge detecting means 142 examines the figure bits in the figure data buffer 132, in order to judge whether or not an edge is represented by them. That is, for each of the figure bits, the edge detecting means 142 determines whether the bit is "1" or "0".

6) If there are no "0" values in the figure bits, i.e. if all the figure bits are "1", the edge detecting means 142 determines that the pixel data including the figure bits does not represent an edge. That is, the pixel data represents an area inside or the outside of edges. In this case, the edge detecting means 142 puts out a signal "0". This signal "0" is put in OR gate 143 via AND gate 151 so that no edge emphasis is performed..

7) On the other hand, if the figure bits include a "0" value, the edge detecting means 142 determines that the figure bits represents an edge and outputs a signal "1". At the same time, if the edge emphasis flag means 152 is outputting a signal "1", which is inputted to the OR gate 143, the edge is emphasised as in the second embodiment. On the other hand, when edge emphasis flag means 152 outputs a signal "0", edge is not emphasised even if the existence of an edge is detected, because the OR gate 143 receives an input signal "0" from the AND gate 151.

<Embodiment 4>

As noted above, the graphics processor of the second embodiment has a drawback in that the colour of an outline portion of a figure stands out in contrast with the colour of the inside of the figure, though it is effective for forming smooth outlines with high resolution of graphic edges. On the other hand, the graphics processor of the third embodiment is not capable of altering the selection of edge emphasis in the course of printing process after the selection has been made. As a result of this, when the gradation value is low, i.e. the colour is thin, the graphic quality is decreased as the figure outline stands out owing to the edge emphasis, although the edge emphasis is effective to increase the graphic quality when the gradation in graphics is high, i.e. the colour is thick.

In a fourth embodiment, a graphics processor is configured so that an outline emphasis may be altered corresponding to the gradation value in graphics, taking into account the fact that smoothing the edges of thin colour graphics cannot improve the appearance of figure because of the characteristics of human vision. That is, the graphic processor performs outline emphasis of thick colour graphics, while prohibiting outline emphasis of thin colour graphics. Thus, the graphic processor is configured to be capable of performing a graphic process selectively, so as to facilitate high quality printing.

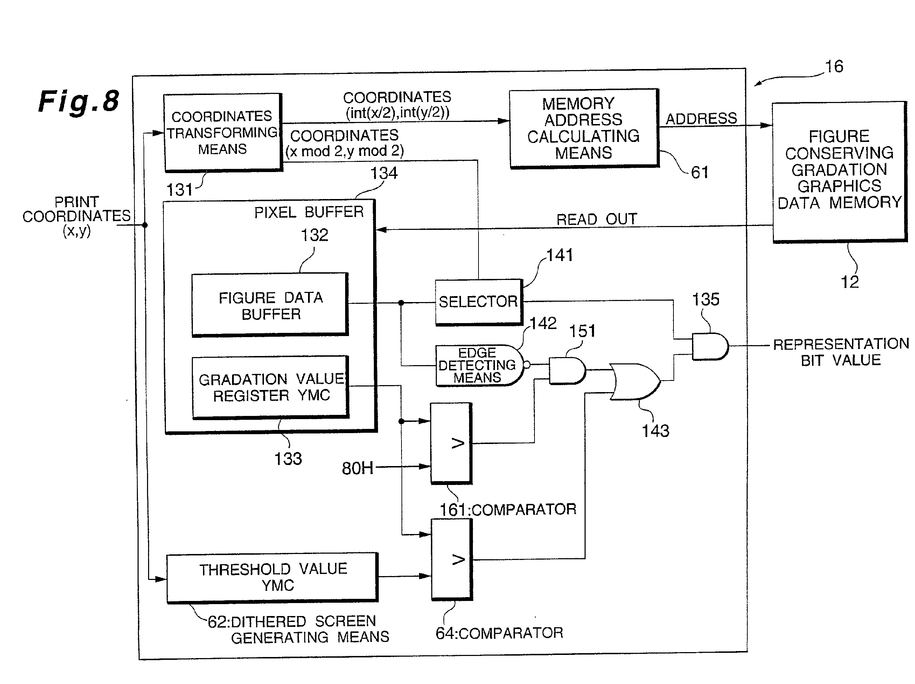

Fig. 8 is a block diagram showing the configuration of a figure conserving bitmapping means 16 of a graphic processor according to the fourth embodiment of the invention. The figure conserving bitmapping means 16 comprises a comparator 161 instead of the edge emphasis flag means 152 of the third embodiment. The figure conserving bitmapping means 16 is configured to always input "80H" to one input terminal of the comparator 161. The other input terminal of the comparator 161 is connected to the output terminal of the gradation value register 133, while the output of comparator 161 is inputted to AND gate 151. The remaining elements of the processor are configured is same manner as the processor of Fig. 7.

In the graphic processor of Fig. 8, the gradation value of the pixel data is compared with "80H" by the comparator 161 and, if the gradation value of pixel data is more than this value, the comparator 161 puts out signal "1". When the output signal of comparator 161 is "1", edge emphasis of the bitmap graphics is enabled with the representation bit value output by AND gate 135 being made valid, an a similar manner to the scenario where the edge emphasis flag means 152 outputs signal "1" in the graphic processor of the third embodiment.

By way of contrast, when the gradation value of pixel data is less than "80H", the comparator 161 outputs a signal "0". Edge emphasis of bitmap graphics is then prevented in accordance with the representation bit value outputted from AND gate 135.

<Embodiment 5>

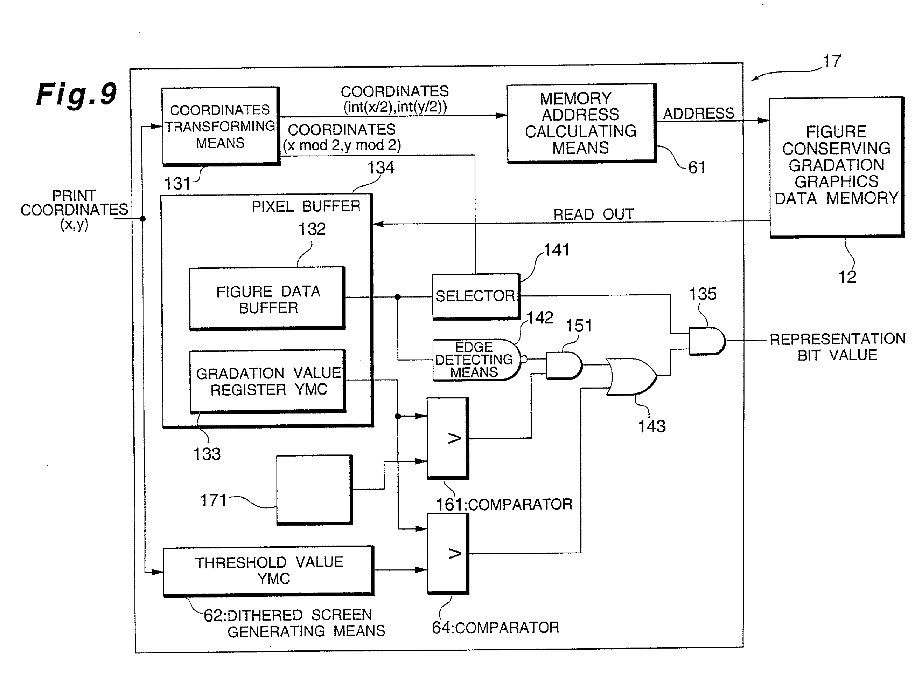

Fig. 9 is a block diagram showing the configuration of a figure conserving bitmapping means 17 of a graphic processor according to a fifth embodiment of the invention. The figure conserving bitmapping means 17 resembles the graphic processor of Fig. 8 but further comprises an edge emphasis valid gradation value register 171. Data can be written to the edge emphasis valid gradation value register 171 by a processor not shown in the drawings. The output terminal of the edge emphasis valid gradation value register 171 is connected to one of the input terminals of comparator 161. The other input terminal of comparator 161 is connected with the output terminal of gradation value register 133.

In the graphic processor of Fig. 9, the comparator 161 compares the output value of the edge emphasis valid gradation value register 171 with the output value of gradation value register 133 (gradation value of pixel data). If the gradation value of pixel data is greater than the output value of edge emphasis valid gradation value register 171, the comparator 161 outputs a signal "1" and edge emphasis of bitmap graphics is enabled using the representation bit value outputted by AND gate 135 in a similar manner to the graphics processor of the third embodiment, when the output value from edge emphasis flag means 152 is "1". However, if the gradation value of pixel data is less than the output value from edge emphasis valid gradation value register 171, the comparator 161 output is "0". So, the edge emphasis of bitmap graphics is prohibited in accordance with the representation bit value outputted from AND gate 135.

The graphic processor of the fifth embodiment can control the use of outline emphasis according to the circumstances of graphic colour by configuring the edge emphasis valid gradation value register 171 so that it can freely set the reference gradation value of pixel data using a program. This is different to the graphic processor of Fig. 8, which selects one of only two processes, where one process enables outline emphasis of thick colour graphics and the other forbids outline emphasis of thin colour graphics.

<Embodiment 6>

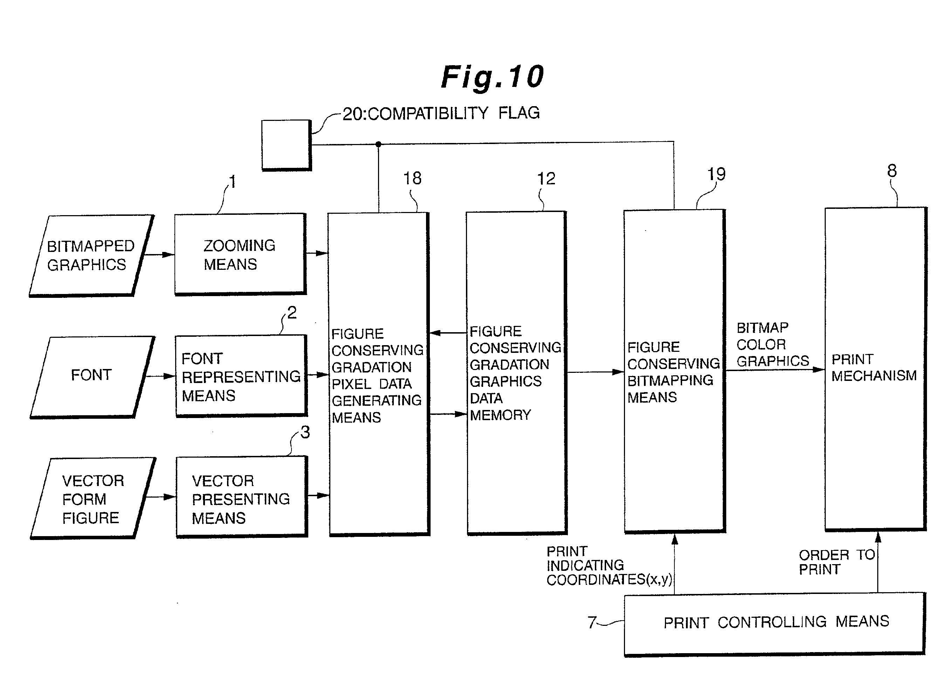

Fig. 10 is a block diagram showing an outline configuration of a graphic processor according to a sixth embodiment of the invention. This graphic processor comprises a zooming means 1, a font representing means 2, a vector representing means 3, a figure conserving gradation pixel data generating means 18, a figure conserving gradation graphics data memory 12, a figure conserving bitmapping means 19, a compatibility flag 20 which can be rewritten freely by a program, a print controlling means 7 and a print mechanism 8. The output of the compatibility flag 20 is fed to both of the figure conserving gradation pixel data generating means 18 and the figure conserving bitmapping means 19. With the exception of the figure conserving gradation pixel data generating means 18, the figure conserving bitmapping means 19 and the compatibility flag 20, the configuration of the graphic processor resembles that of the graphic processor of Embodiment 1.

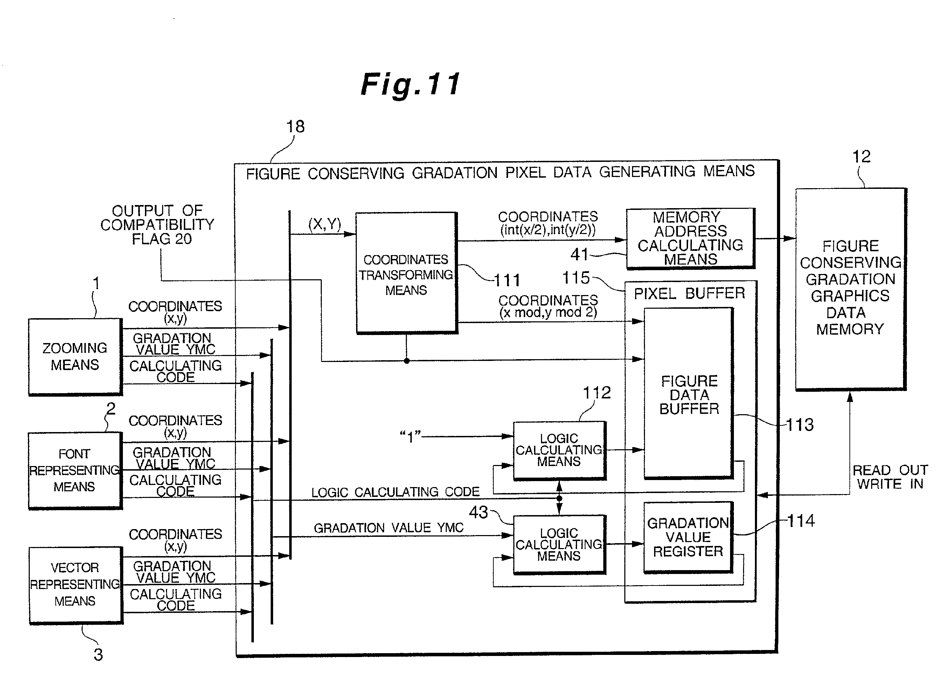

Fig. 11 is a block diagram showing the configuration of figure conserving gradation pixel data generating means 18. The figure conserving gradation pixel data generating means 18 is configured to feed the output signal from the compatibility flag 20 to both the figure transforming means 111 and the figure data buffer 113. The remaining elements of the figure conserving gradation pixel data generating means 18 are the same as for the figure conserving gradation pixel data generating means 11 of Fig. 3.

The figure conserving gradation pixel data generating means 18 outputs upper coordinates and lower coordinates when coordinates (x,y) are inputted to the coordinates transforming means 111. In this embodiment, the upper and lower coordinates are outputted as shown in table 1 in accordance with the signal from the compatibility flag 20.

[Table 1]

| Output of Compatibility Flag 20 | Upper Coordinates | Lower Coordinates |
|---|---|---|
| "0" | (int(x/2), int(y/2)) | (x mod 2, y mod 2) |
| "1" | (x,y) | (0,0) |

As shown in Table 1, the graphic processor of Fig. 10 performs the same operations as the graphic processor of Embodiment 1 when the output signal of compatibility flag 20 is "0". On the other hand, the graphic processor of Fig. 10 performs the same operations as a conventional printer when the output signal of compatibility flag 20 is "1".

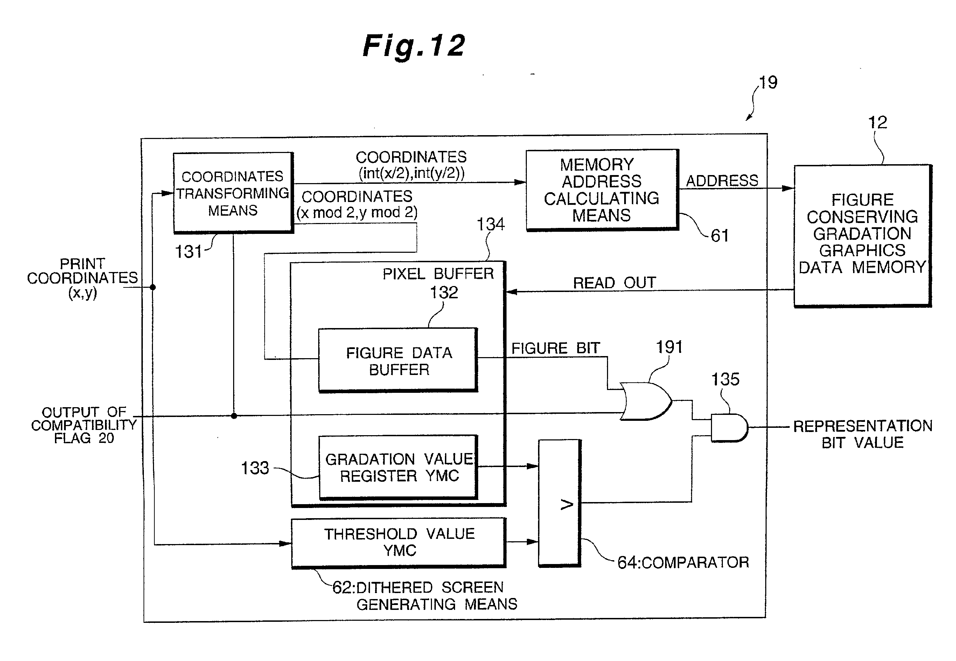

Fig. 12 is a block diagram showing the configuration of figure conserving bitmapping means 19. This figure conserving bitmapping means 19 is configured to input the output signal from compatibility flag 20 to an OR gate 191 and the coordinates transforming means 131. The OR gate 191 also receives the output signal of the figure data buffer 132. These are logically calculated in OR gate 191 and the result is inputted to AND gate 135. The remaining features of the figure conserving bitmapping means 19 are the same as those of the figure conserving bitmapping means 13 of Fig. 4.

The coordinates transforming means 131 of figure conserving bitmapping means 19 performs the same processes as the coordinates transforming means 111 of figure conserving gradation pixel data generating means 18. The output signal of figure data buffer 132 is inputted to AND gate 135 via OR gate 191 when the output signal of compatibility flag 20 is "0", so as to perform the same operation as the graphic processor shown in Fig. 1. On the other hand, a fixed signal "1" is inputted to AND gate 135 independently of the output signal of figure buffer 132. Therefore, the representation bit value outputted from AND gate 135 corresponds to the output value of the comparator 64, so as to perform the same operation as the conventional printer.

Thus, the graphic processor of Embodiment 6 performs the same operations as the graphic processor of Embodiment 1 when the output signal of compatibility flag 20 is "0" and performs the same operations as a conventional printer when the output signal of compatibility flag 20 is "1".

Therefore, the graphic processor of the sixth embodiment is capable of performing a printing process using a conventional graphic processing method, as well as the figure conserving representation method of present invention.

<Embodiment 7>

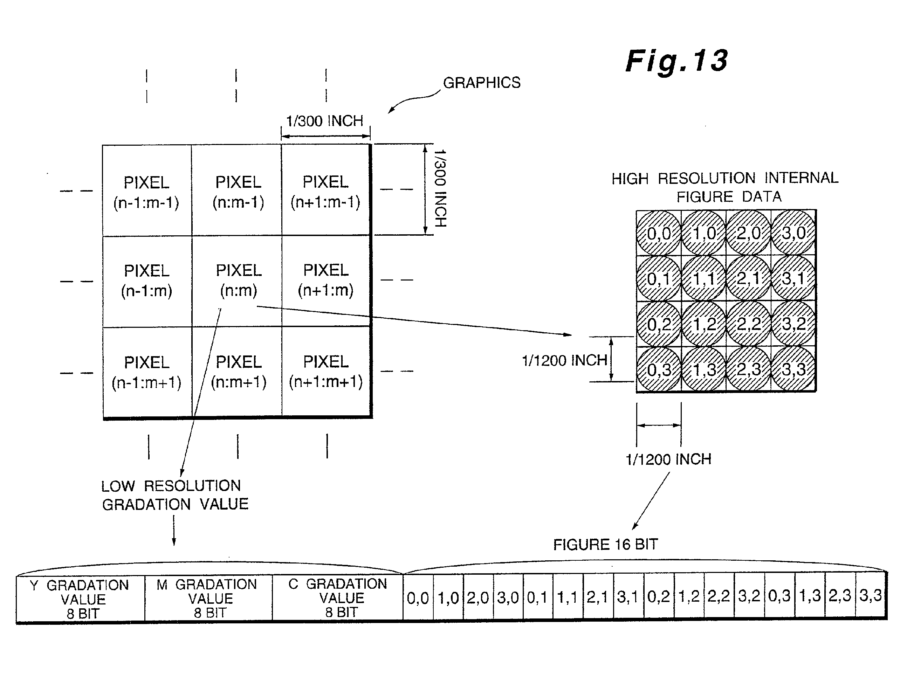

In the graphic processor of the first embodiment, the gradation representing resolution is 600 DPI and the figure representing resolution is 1200 DPI. However, a graphic processor according to a seventh embodiment is capable of utilising a plurality of resolutions. Hereafter, a method is described for using two kinds of data formats when the resolution of printer is 1200DPI, which are the data format shown in Fig. 2, i.e. gradation representing resolution 600DPI and figure representing resolution 1200DPI, and a second data format shown in Fig. 13, in which the gradation representing resolution is 300DPI and the figure representing resolution is 1200DPI. It goes without saying that what the graphic processor of the seventh embodiment is not limited to the use of these specific data formats. Any other data formats of resolution can be adopted.

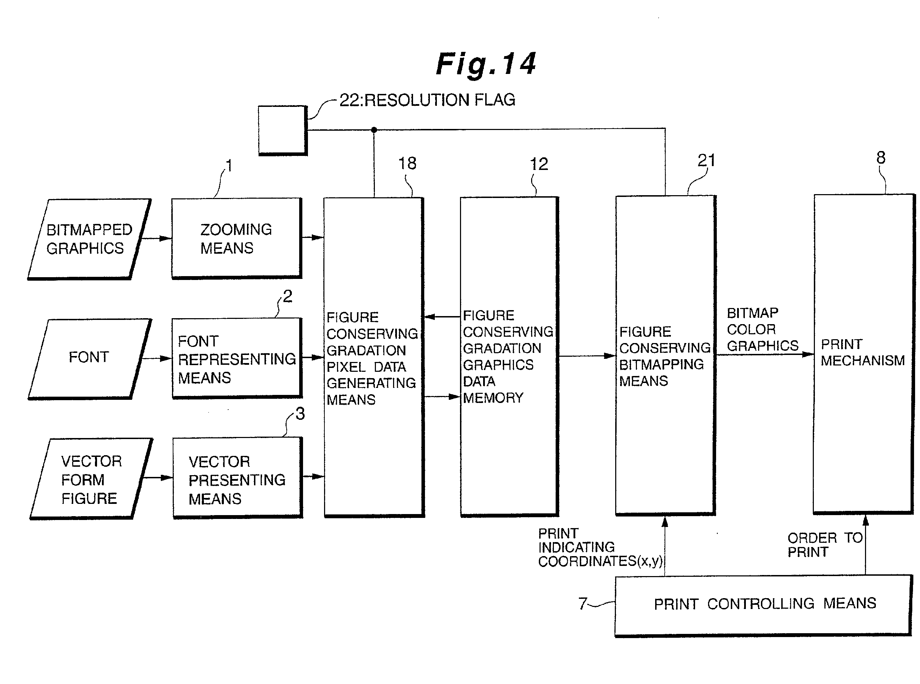

Fig. 14 is a block diagram showing the configuration of a graphic processor according to the seventh embodiment. The graphic processor differs from that of Embodiment 6 as it comprises a figure conserving bitmapping means 21 instead of the figure conserving bitmapping means 19 and a resolution flag 22 is provided instead of compatibility flag 20. The resolution flag 22 can be rewritten freely using a program. The remaining features of the figure conserving bitmapping means 21 are the same as for the graphic processor of Embodiment 6.

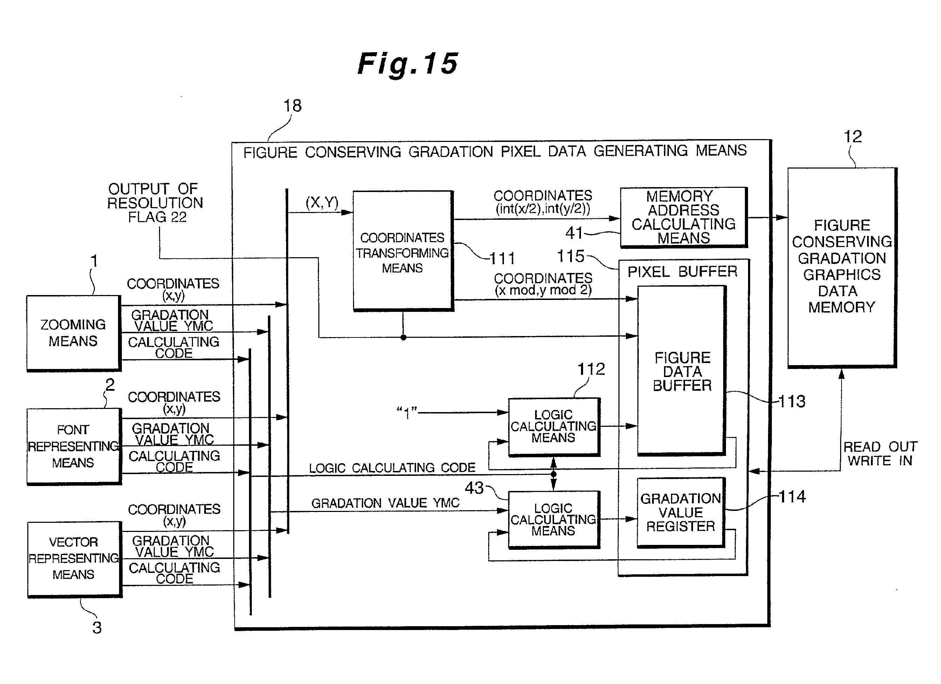

Fig. 15 is a block diagram showing the configuration of the figure conserving gradation pixel data generating means 18. This figure conserving gradation pixel data generating means 18 outputs upper coordinates and lower coordinates when it is inputted with coordinates (x,y). In this embodiment, the coordinates are output as shown in next Table 2, according to the resolution flag signal.

[Table 2]

| Output of Resolution Flag 22 | Upper Coordinates | Lower Coordinates |
|---|---|---|
| "0"<br>grad. 600DPI<br>fig. 1200DPI | (int(x/2), int(y/2)) | (x mod 2, y mod 2) |
| "1"<br>grad. 300DPI<br>fig. 1200DPI | (int(x/4), int(y/4)) | (x mod 4, y mod 4) |

In order to handle data in the format shown in Fig. 13, the figure data buffer 113 shown in Fig. 15 is configured with a memory capacity of 16 bits because the figure bits per pixel are 4 x 4 = 16 bits. Each bit corresponding to the lower coordinates of Table 2 is read out from these 16 bits, subjected to logical calculation and written back in the buffer again.

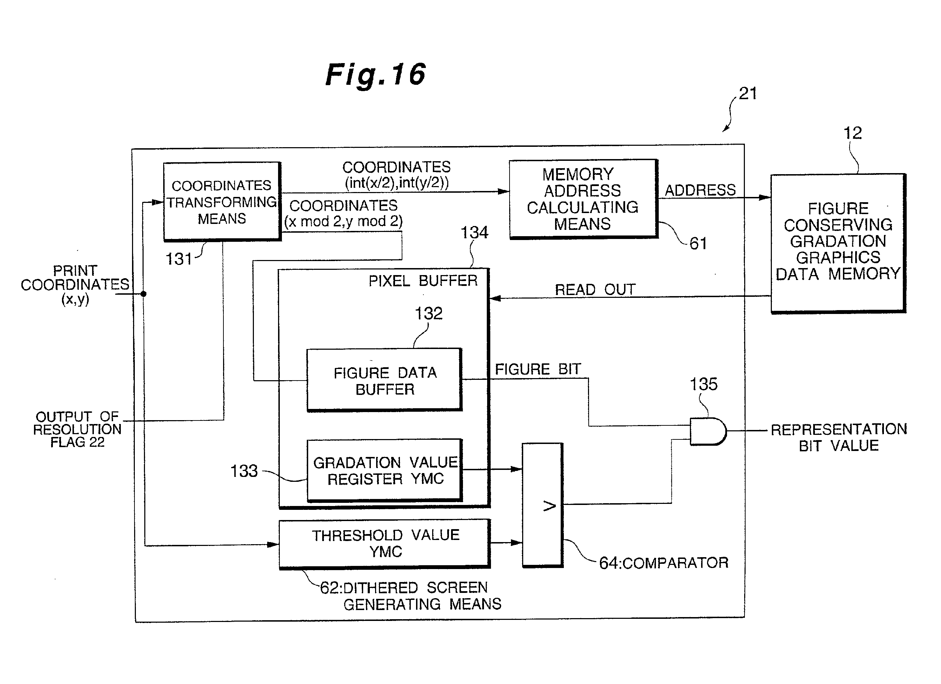

Fig. 16 is a block diagram showing the configuration of figure conserving bitmapping means 21. The figure conserving bitmapping means 21 is configured to input the output signal of resolution flag 22 to the coordinates transforming means 131. The remaining features of the figure conserving bitmapping means 21 are same as those of the figure conserving bitmapping means 13 of Figure 4.

The coordinates transforming means 131 of the figure conserving bitmapping means 21 also performs the operation shown in Table 2. The figure data buffer 132 is also configured to have a memory capacity of 16 bits for the same reason as the figure data buffer 113.

The graphic processor of Embodiment 7 performs the same operations as the processor of Embodiment1 with the exception of the coordinates transforming method shown here. Therefore, the graphic processor of Embodiment 7 is capable of printing with two different resolutions depending on whether the output signal of resolution flag 22 is "0" or "1".

Thus, the graphic processor of Embodiment 7 can perform printing processes with two different resolutions. Therefore, when the actual printing process is performed, the graphic processor can cope with demands which prioritise print quality and demands which prioritise print speed. That is, a high resolution printing process (c.f. data format shown in Fig. 2) can be performed when print quality is prioritised, while a low resolution printing process (c.f. data format shown in Fig. 13) can be performed if print speed is prioritised.

<Embodiment 8>

A graphic processing method according to present invention is configured to maintain high gradation representing resolution so as to represent input bitmap graphics at their original resolution, when this original resolution is high. However, when no high density bitmap graphics are included in the original graphics data, the high resolution data processing is not only unnecessary for providing high graphic quality but also causes a reduction in print speed. Therefore, according to an eighth embodiment of the invention, a graphic processing system is capable of improving print speed when the resolution of original data is not high, by means of reducing the resolution of intermediate graphics.

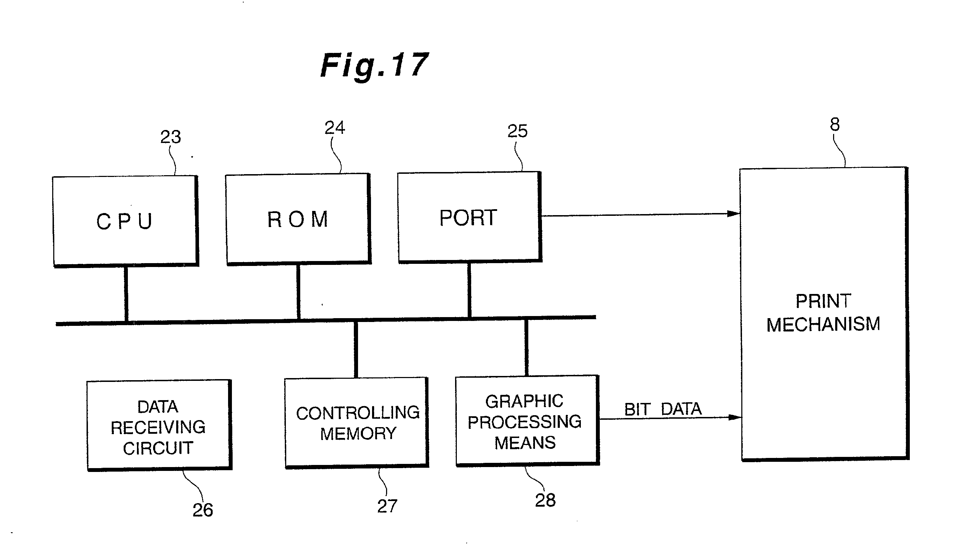

Fig. 17 is a block diagram showing the configuration of a graphic processing system according to the eighth embodiment. The system comprises a CPU 23, a ROM 24, a port 25, a data receiving circuit for receiving data from outer system not shown in the drawings, a controlling memory 27 and graphic processing means 28, each of which is connected to a system bus. The graphic processing means 28 comprises the graphic processor of Embodiment 7. The operation of the graphic processing system is controlled by a program stored in ROM 24. That is, CPU 23 controls data receiving from the outer system, representing and printing while it executes a program stored in ROM 24.

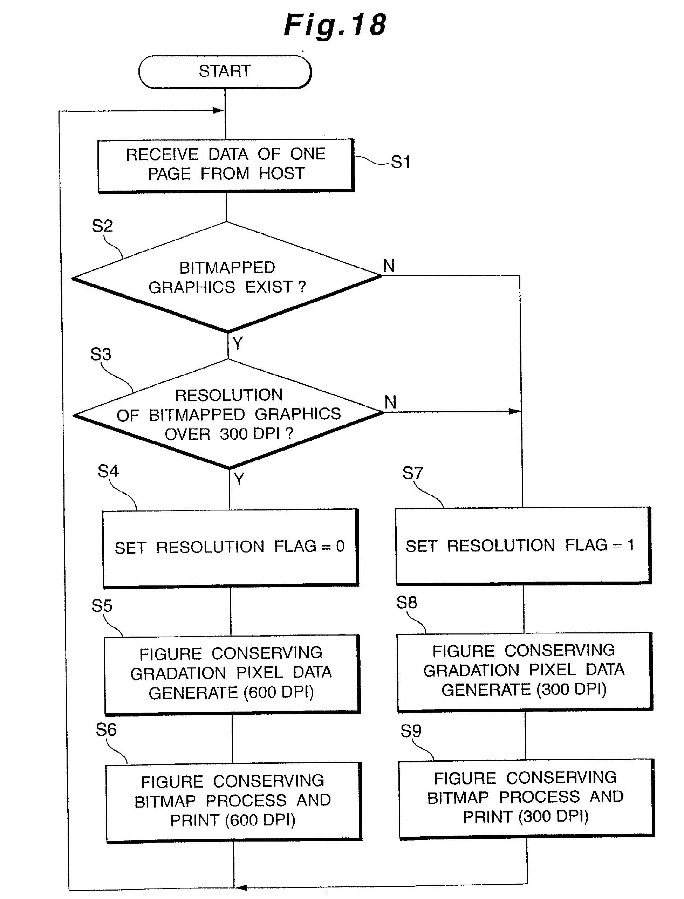

Fig. 18 is a flowchart showing the operation of the graphic processing system of Fig. 17.

To begin with, a page of graphics data is received from the outer system (not shown in the drawings) via the data receiving circuit 26 (step S1). The CPU 23 extracts bitmap graphics, texts, figure data etc. while decoding commands included in the graphics data.

Next, the CPU 23 determines whether or not the received graphics data includes bitmap graphics (step S2). If so, the process proceeds to step S3. Where the graphics data does not include bitmap graphics, the CPU 23 proceeds to step S7.

Where bitmap graphics are present, the CPU 23 then determines whether or the resolution is higher than 300DPI (step S3), proceeding to step S4 if the resolution is higher than or equal to 300DPI or to step S7 if it is lower.

If the resolution is higher than, or equal to, 300DPI, the CPU 23 sets the output from resolution flag 22 of graphic processing means 28 (c.f. graphic processor of Embodiment 7) to "0" (step S4). The CPU 23 then operates the figure conserving gradation pixel data generating means 18 (c.f. Fig. 15) of graphic processing means 28. A page of graphics data consisting of figure conserving gradation pixel data generated here is written to the figure conserving gradation graphics data memory 12 (step S5). In this example, the data is processed with gradation representing resolution 600DPI and figure representing resolution 1200DPI because the output signal of resolution flag 22 is "0".

The data in figure conserving gradation graphics data memory 12 is then bitmapped by the figure conserving bitmapping means 21 (c.f. Fig. 16) of graphic processing means 28, output to the print mechanism 8 and printed (step S6). The process then continues by returning to step S1.

On the other hand, if the received graphics data does not contain bitmap graphics, or if the bitmap graphics have a resolution lower than 300DPI, the CPU 23 sets the output from resolution flag 22 of graphic processing means 28 to "1" (step S7). The CPU 23 then operates the figure conserving gradation pixel data generating means 18 of graphic processing means 28 and writes a page of graphics data consisting of figure conserving gradation pixel data generated here to the figure conserving gradation graphics data memory 12 (step S8). In this example, the data is processed with gradation representing resolution 300DPI and figure representing resolution 1200 DPI because the output signal of resolution flag 22 is "1".

Next, the data in the figure conserving gradation graphics data memory 12 is bitmapped by the figure conserving bitmapping means 21 of graphic processing means 28, output to the print mechanism 8 and printed (step S9). The process then continues by returning to step S1.

By repeating this process, the printing process is performed.

Thus, according to the graphic processing system of Embodiment 8, the print quality can be improved by performing graphic process with high internal gradation resolution when the resolution of original graphics data is high. On the other hand, the print speed can be increased as graphic processing is performed with a reduced internal gradation resolution when the resolution of original graphics data is low. In this manner, optimal printer control can be performed according to the resolution of the original graphics data.

<Embodiment 9>

As mentioned before, the graphic processing method of present invention is configured to keep high gradation representing resolution in order to represent the original graphics as it is, when the resolution of bitmap graphics of original graphic data is high. For this reason, it may require a large memory capacity for realising high density bitmap graphic processing. So, the cost of device is likely to increase.

Therefore, the graphic processing system of Embodiment 9 is intended to suppress the device cost by enabling control of the resolution of the graphics to be processed according to the memory capacity installed in the graphic processor.

The configuration of graphic processing system according to the ninth embodiment is similar to that of the graphic processing system shown in Fig. 17 but further incorporates a memory capacity checking process in the course of its graphic processing procedures. The system of Embodiment 9 is also operated by a program stored in ROM 24.

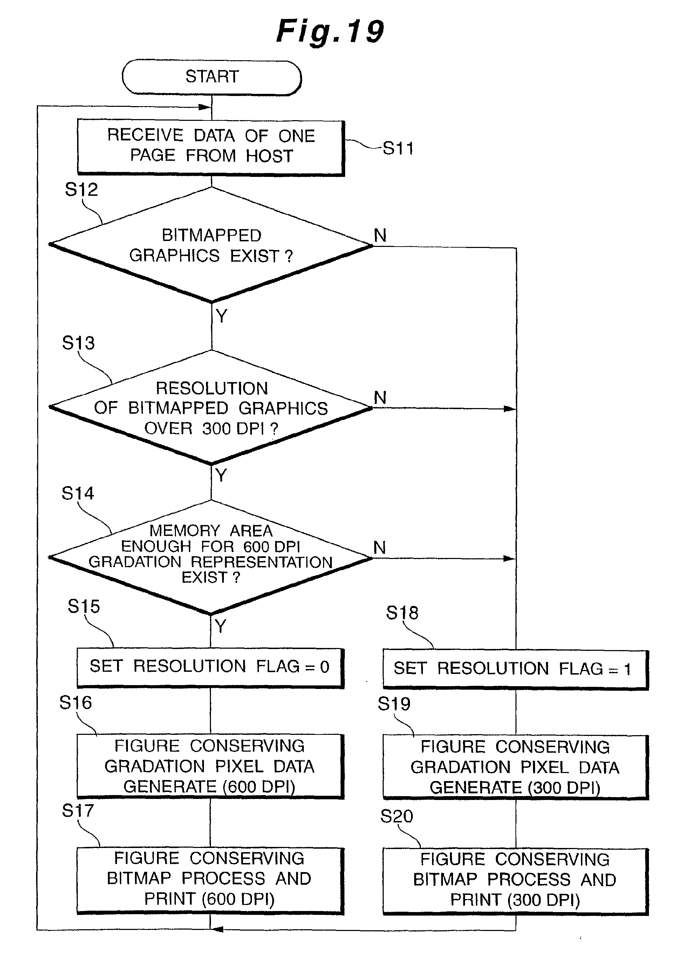

Fig. 19 is a flowchart showing the operation of graphic processing system of Embodiment 9.

To begin with, a page of graphics data is received from the other system (step S11). The CPU 23 abstracts bitmap graphics, texts, figure data etc. while decoding commands included in the graphics data.

Next, the CPU 23 determines whether or not bitmap graphics are included in the received graphics data (step S12). If so,, the process proceeds to step S13. On the other hand, the process proceeds to step S18 if there are no bitmap graphics.

Where the received graphics data includes bitmap graphics, the, CPU 23 determines whether the resolution is more than or equal to 300 DPI (step S13) and proceeds to step S14 if this condition is met. On the other hand, the process proceeds to step S18 if the resolution is less than 300DPI.

In step S14, the CPU 23 considers the capacity of figure conserving gradation graphics data memory 12 of graphic processing means 28 (c.f. graphic processor of Embodiment 7) and judges whether or not the necessary capacity for representing with 600DPI gradation is available. If sufficient memory capacity is available, the process proceeds to step S15. Otherwise, the process proceeds to step S18.

In step S15, the CPU 23 sets the output from resolution flag 22 of graphic processing means 28 to "0". Next, the CPU 23 operates the figure conserving gradation pixel data generating means 18 (c.f. Fig. 15) of graphic processing means 28 and writes a page of graphics data consisting of the generated figure conserving gradation pixel data to the figure conserving gradation graphics data memory 12 (step S16). In this example, the data is processed with gradation representing resolution 600DPI and figure representing resolution 1200DPI because the output signal of resolution flag 22 is "0".

The data in figure conserving gradation graphics data memory 12 is bitmapped by the figure conserving bitmapping means 21 (c.f. Fig. 16) of graphic processing means 28, output to the print mechanism 8 and printed (step S17). The process continues by returning to step S11.

On the other hand, if it is determined that bitmap graphics are not present at step S12, or that the resolution of bitmap graphics is less than 300DPI at step S13 or that sufficient memory capacity for representing 600DPI gradation is not available, the CPU 23 sets the output from resolution flag 22 of graphic processing means 28 to "1" (step S18). The CPU 23 then operates the figure conserving gradation pixel data generating means 18 (c.f. Fig. 15) of graphic processing means 28 and writes a page of graphics data consisting of figure conserving gradation pixel data generated here to the figure conserving gradation graphics data memory 12 (step S19). In this example, the data is processed with gradation representing resolution 300DPI and figure representing resolution 1200 DPI because the output signal of resolution flag 22 is "1".

The data stored in the figure conserving gradation graphics data memory 12 is bitmapped by the figure conserving bitmapping means 21 of graphic processing means 28, output to the print mechanism 8 and printed (step S20). The process continues by returning to step S11.

By repeating these processes, the printing process is performed.

Thus, according to the graphic processing system of Embodiment 9, the gradation representing resolution can be controlled according to the memory capacity available to the graphic processor. Therefore, printing may be processed with gradation resolution of 300DPI when only a small memory capacity is available. Where the user demands high resolution printing, the user has the option of installing additional memory for meeting the resolution requirements. Where the user requires only low resolution printing, it is not necessary for the user to install unnecessary additional memory. As a result, increases in the cost of the printer device may be prevented.

Although embodiments of present invention have been described with reference to the drawings, the present invention is not limited to these embodiments and may be changed or improved within the scope of the claims appended hereafter. For example, the present invention can be used in a monochrome printer as well as colour printer.

## Claims

1. A graphic processing method comprising:

   a process of dividing pixel graphics to be printed into groups of plural pixels and deciding colouring for each of the groups of pixels and
   a process of painting away each pixel directing to be painted with the decided colour.

2. A graphic processor for processing presentation of pixel graphics comprising:

   a gradation data generating section configured to divide inputted graphics data into regions comprising a plurality of pixels and to read data relating to a first region including a plurality of first gradation data of pixels with first positioning data from divided inputted graphics data, so as to generate second gradation data from the plurality of first gradation data from the first region;
   a figure data generating section configured to generate figure data corresponding to the first positioning data by comparing the first gradation data with the second gradation data; and
   a figure conserving gradation graphics data memory configured to store the second gradation data and figure data of each region.

3. A graphic processor according to Claim 2 wherein the figure data is bitmap data and the figure data generating section selects the figure data from either value of a certain colour or a white colour which the figure data can take.

4. A graphic processor according to Claim 2 further comprising
   a second graphics data transforming section configured to read the second gradation data with figure data out of the figure conserving gradation graphics data, so as to transform it into another region including a plurality of second gradation data with second positioning data;
   wherein the gradation data generating section is further configured to generate third gradation data from the plurality of first gradation data in the read out region and the plurality of second gradation data in the stored region; and
   the figure data generating section is further configured to generate figure data by comparing third gradation data with the second gradation data.

5. A graphic processor according to Claim 4 wherein the figure conserving gradation graphics data memory stores the third gradation data and figure data as the second gradation data and figure data.

**6.** A graphic processor according to Claim 2 further comprising

a bitmapping means including an edge detecting means for detecting whether the figure data represents an edge.

**7.** A graphic processor according to Claim 6 wherein the bitmapping means further including an edge emphasis flag means, where an output of the edge emphases flag means determines whether or not the output bit at the edge is painted.

**8.** A graphic processor according to Claim 6 wherein the bitmapping means further includes a comparator, wherein the outputting bit is always painted at edges only when the gradation value exceeded the prescribed value as indicated by an output of the comparator.

**9.** A graphic processor according to Claim 2 further comprising a compatibility flag configured to enable to a conventional graphic processing method.

**10.** A graphic processor according to Claim 2 further comprising a resolution flag to enable selection of the resolution of a pixel to be printed.

**11.** A graphic processor according to Claim 2, wherein the gradation data generating section comprises:

a coordinates transforming means for transforming the inputted coordinates of the first positioning data into coordinates of the second positioning data and
a gradation value register for storing a gradation value to be stored in the graphics data memory.

**12.** A graphic processor according to Claim 2 wherein the figure data generating section comprises:

a coordinates transforming means configured to transform the inputted coordinates into regional coordinates; and
a figure data buffer for storing each of bits to be stored with the gradation value.

**13.** A graphic processor according to Claim 4 wherein the second graphics data transforming section comprises:

a pixel buffer for storing the second gradation data with figure data out of the graphics data memory;
a logic calculating means to calculate third gradation data between the inputted first gradation data and the second gradation data stored in the pixel buffer; and
another logic calculating means to calculate another figure data.

**14.** A graphic processing system comprising:

a processor for executing a graphic controlling program,
a memory for storing the graphic controlling program; and
graphic processing means configured to perform a method of dividing graphics into regions wherein each of the regions each certain colour is assigned and the assigned colour is painted according to the value of each of bits in each region;

wherein the processor is configured to select an optimum number of bits in each region according to the program.

**15.** A graphic processing system according to Claim 14, wherein the selection of the optimum number of bits is based on the graphics data to be processed.

**16.** A graphic processing system according to Claim 14 wherein the selection of the optimum number of bits is based on the available capacity of the figure conserving gradation graphics data memory.

**17.** A graphic processing system according to Claim 15 or 16 wherein the graphics data to be processed to select the optimum number of bits is a bitmap graphics data.

**18.** A graphic processing system according to Claim 17 wherein the optimum number of bits is selected to be small when the bitmap graphics gradation resolution is more than or equal to a predetermined value and to be large when the resolution is lower than said predetermined value.

19. An internal gradation graphics data format, wherein pixel data configured in said format comprises one or more gradation values expressed using a first predetermined number of bits and figure data expressed using a second predetermined number of bits.

20. A data format according to claim 19, wherein the gradation values are expressed using a first resolution and a first precision, while the figure data is expressed using a second resolution and a second precision, wherein the first resolution is lower than the second resolution and the first precision is higher than the second precision.

21. A graphic processor comprising:

receiving means for receiving data, wherein said data relates to a pixel and comprises at least one gradation value and pixel coordinates;
first data transforming means configured to transform received data into an internal gradation graphics data format;
coordinate transformation means for transforming the pixel coordinates into first and second coordinate systems, wherein the first and second coordinate systems have different resolutions;
memory means for storing one or more gradation values relating to the pixel coordinates;
logic calculating means for performing a calculation based on a gradation value relating to the pixel coordinates stored in the memory and the received gradation value and storing the result of the calculation in the memory; and
second data transforming means for transforming the pixel data stored in the memory into a bitmap graphics format.

## Fig.1

BITMAPPED GRAPHICS → ZOOMING MEANS (1)

FONT → FONT REPRESENTING MEANS (2)

VECTOR FORM FIGURE → VECTOR PRESENTING MEANS (3)

FIGURE CONSERVING GRADATION PIXEL DATA GENERATING MEANS (11)

FIGURE CONSERVING GRADATION GRAPHICS DATA MEMORY (12)

FIGURE CONSERVING BITMAPPING MEANS (13)

BITMAP COLOR GRAPHICS

PRINT MECHANISM (8)

PRINT INDICATING COORDINATES(x,y)

ORDER TO PRINT

PRINT CONTROLLING MEANS (7)

EP 1 315 122 A2

# Fig.2

1/600 INCH

1/600 INCH

GRAPHICS

| PIXEL (n-1:m-1) | PIXEL (n:m-1) | PIXEL (n+1:m-1) |
| PIXEL (n-1:m) | PIXEL (n:m) | PIXEL (n+1:m) |
| PIXEL (n-1:m+1) | PIXEL (n:m+1) | PIXEL (n+1:m+1) |

HIGH RESOLUTION INTERNAL FIGURE DATA

1/1200 INCH

0,0  1,0
0,1  1,1

1/1200 INCH

FIGURE 4 BIT

LOW RESOLUTION GRADATION VALUE

| Y GRADATION VALUE 8 BIT | M GRADATION VALUE 8 BIT | C GRADATION VALUE 8 BIT | 0,0 | 1,0 | 0,1 | 1,1 |

EP 1 315 122 A2

Fig.3

FIGURE CONSERVING GRADATION PIXEL DATA GENERATING MEANS — 11

| ZOOMING MEANS — 1 |
| FONT REPRESENTING MEANS — 2 |
| VECTOR REPRESENTING MEANS — 3 |

COORDINATES (x,y)
GRADATION VALUE YMC
CALCULATING CODE

COORDINATES (x,y)
GRADATION VALUE YMC
CALCULATING CODE

COORDINATES (x,y)
GRADATION VALUE YMC
CALCULATING CODE

(X,Y)

COORDINATES TRANSFORMING MEANS — 111

COORDINATES (int(x/2),int(y/2))

MEMORY ADDRESS CALCULATING MEANS — 41

FIGURE CONSERVING GRADATION GRAPHICS DATA MEMORY — 12

PIXEL BUFFER — 115

COORDINATES (x mod,y mod 2)

"1"

LOGIC CALCULATING MEANS — 112

FIGURE DATA BUFFER — 113

LOGIC CALCULATING CODE

GRADATION VALUE YMC

LOGIC CALCULATING MEANS — 43

GRADATION VALUE REGISTER — 114

READ OUT
WRITE IN

EP 1 315 122 A2

19

## Fig.4

PRINT COORDINATES (x,y)

COORDINATES TRANSFORMING MEANS — 131

COORDINATES (int(x/2),int(y/2))

COORDINATES (x mod 2,y mod 2)

MEMORY ADDRESS CALCULATING MEANS — 61

ADDRESS

FIGURE CONSERVING GRADATION GRAPHICS DATA MEMORY — 12

13

PIXEL BUFFER — 134

READ OUT

FIGURE DATA BUFFER — 132

FIGURE BIT

GRADATION VALUE REGISTER YMC — 133

135

REPRESENTATION BIT VALUE

THRESHOLD VALUE REGISTER YMC

> 64:COMPARATOR

62:DITHERED SCREEN GENERATING MEANS

EP 1 315 122 A2

20

## Fig.5

**Fig.6(a)**
DITHERED SCREEN

**Fig.6(b)**
FIGURE CONSERVING GRADATION
PIXEL DATA

**Fig.6(c)**
BITMAP GRAPHICS BY
EMBODIMENT 1

**Fig.6(d)**
BITMAP GRAPHICS BY
EMBODIMENT 2

*Fig.7*

12 — FIGURE CONSERVING GRADATION GRAPHICS DATA MEMORY

15

ADDRESS

READ OUT

61 — MEMORY ADDRESS CALCULATING MEANS

COORDINATES (int(x/2),int(y/2))

COORDINATES (x mod 2,y mod 2)

131 — COORDINATES TRANSFORMING MEANS

PRINT COORDINATES (x,y)

134 — PIXEL BUFFER

132 — FIGURE DATA BUFFER

133 — GRADATION VALUE REGISTER YMC

THRESHOLD VALUE YMC

62:DITHERED SCREEN GENERATING MEANS

141 — SELECTOR

142

151

143

135

REPRESENTATION BIT VALUE

152:EDGE EMPHASIS VALID OR INVALID FLAG

EDGE DETECTING MEANS

64:COMPARATOR

23

## Fig.8

PRINT COORDINATES (x,y)

COORDINATES TRANSFORMING MEANS — 131

COORDINATES (int(x/2),int(y/2))

COORDINATES (x mod 2,y mod 2)

MEMORY ADDRESS CALCULATING MEANS — 61

ADDRESS

FIGURE CONSERVING GRADATION GRAPHICS DATA MEMORY — 12

16

PIXEL BUFFER 134

FIGURE DATA BUFFER 132

READ OUT

SELECTOR 141

GRADATION VALUE REGISTER YMC 133

EDGE DETECTING MEANS 142

151

135

REPRESENTATION BIT VALUE

143

80H

> 161:COMPARATOR

THRESHOLD VALUE YMC

>

62:DITHERED SCREEN GENERATING MEANS

64:COMPARATOR

EP 1 315 122 A2

24

**Fig.9**

COORDINATES
(int(x/2),int(y/2))

COORDINATES
TRANSFORMING
MEANS

COORDINATES
(x mod 2,y mod 2)

MEMORY
ADDRESS
CALCULATING
MEANS

ADDRESS

FIGURE
CONSERVING
GRADATION
GRAPHICS
DATA MEMORY

17

61

12

131

134

PRINT
COORDINATES
(x,y)

PIXEL BUFFER

132

READ OUT

141

FIGURE DATA
BUFFER

SELECTOR

135

GRADATION VALUE
REGISTER YMC

EDGE
DETECTING
MEANS

142    151

143

REPRESENTATION
BIT VALUE

133

171

>

161:COMPARATOR

THRESHOLD VALUE
YMC

>

62:DITHERED SCREEN
GENERATING MEANS

64:COMPARATOR

EP 1 315 122 A2

# Fig.10

20:COMPATIBILITY FLAG

| | | | |
|---|---|---|---|
| BITMAPPED GRAPHICS | → | ZOOMING MEANS (1) | |
| FONT | → | FONT REPRESENTING MEANS (2) | |
| VECTOR FORM FIGURE | → | VECTOR PRESENTING MEANS (3) | |

FIGURE CONSERVING GRADATION PIXEL DATA GENERATING MEANS (18)

FIGURE CONSERVING GRADATION GRAPHICS DATA MEMORY (12)

FIGURE CONSERVING BITMAPPING MEANS (19)

BITMAP COLOR GRAPHICS

PRINT MECHANISM (8)

PRINT INDICATING COORDINATES(x,y)

ORDER TO PRINT

PRINT CONTROLLING MEANS (7)

EP 1 315 122 A2

## Fig.11

FIGURE CONSERVING GRADATION PIXEL DATA GENERATING MEANS — 18

OUTPUT OF COMPATIBILITY FLAG 20

ZOOMING MEANS — 1

FONT REPRESENTING MEANS — 2

VECTOR REPRESENTING MEANS — 3

COORDINATES (x,y)
GRADATION VALUE YMC
CALCULATING CODE

(X,Y)

COORDINATES TRANSFORMING MEANS — 111

COORDINATES (int(x/2),int(y/2))

MEMORY ADDRESS CALCULATING MEANS — 41

COORDINATES (x mod,y mod 2) — 115

PIXEL BUFFER

FIGURE DATA BUFFER — 113

"1"

LOGIC CALCULATING MEANS — 112

LOGIC CALCULATING CODE

GRADATION VALUE YMC — 43

LOGIC CALCULATING MEANS

GRADATION VALUE REGISTER — 114

FIGURE CONSERVING GRADATION GRAPHICS DATA MEMORY — 12

READ OUT WRITE IN

EP 1 315 122 A2

# Fig.12

EP 1 315 122 A2

# Fig.13

HIGH RESOLUTION INTERNAL
FIGURE DATA

| 0,0 | 1,0 | 2,0 | 3,0 |
|-----|-----|-----|-----|
| 0,1 | 1,1 | 2,1 | 3,1 |
| 0,2 | 1,2 | 2,2 | 3,2 |
| 0,3 | 1,3 | 2,3 | 3,3 |

1/1200 INCH

1/1200 INCH

GRAPHICS

1/300 INCH

1/300 INCH

| PIXEL<br>(n-1:m-1) | PIXEL<br>(n:m-1) | PIXEL<br>(n+1:m-1) |
|---|---|---|
| PIXEL<br>(n-1:m) | PIXEL<br>(n:m) | PIXEL<br>(n+1:m) |
| PIXEL<br>(n-1:m+1) | PIXEL<br>(n:m+1) | PIXEL<br>(n+1:m+1) |

LOW RESOLUTION
GRADATION VALUE

| Y GRADATION<br>VALUE<br>8 BIT | M GRADATION<br>VALUE<br>8 BIT | C GRADATION<br>VALUE<br>8 BIT | 0,0 | 1,0 | 2,0 | 3,0 | 0,1 | 1,1 | 2,1 | 3,1 | 0,2 | 1,2 | 2,2 | 3,2 | 0,3 | 1,3 | 2,3 | 3,3 |
|---|---|---|---|---|---|---|---|---|---|---|---|---|---|---|---|---|---|---|

FIGURE 16 BIT

29

## Fig.14

22:RESOLUTION FLAG

```
BITMAPPED          ZOOMING           FIGURE          FIGURE                            FIGURE                    BITMAP        PRINT
GRAPHICS    ──▶    MEANS        ──▶  CONSERVING   ◀── CONSERVING                        CONSERVING    ──▶         COLOR    ──▶  MECHANISM
                        1            GRADATION       GRADATION                          BITMAPPING                GRAPHICS
                                     PIXEL DATA      GRAPHICS                           MEANS                                       8
                   FONT              GENERATING  ──▶ DATA                                  21
FONT        ──▶    REPRESENTING      MEANS           MEMORY
                   MEANS                 18              12
                        2
VECTOR             VECTOR
FORM        ──▶    PRESENTING
FIGURE             MEANS
                        3
```

PRINT
INDICATING
COORDINATES(x,y)

ORDER TO
PRINT

7 ──  PRINT CONTROLLING MEANS

EP 1 315 122 A2

# Fig.15

# Fig.16

## Fig.17

EP 1 315 122 A2

# Fig.18

```
        ( START )
           │
     ┌──────▼──────────────┐
     │ RECEIVE DATA OF ONE │──── S1
     │  PAGE FROM HOST     │
     └──────┬──────────────┘
            │
  S2       ╱ ╲
         ╱     ╲          N
        ◇ BITMAPPED ◇────────────────────┐
         ╲ GRAPHICS  ╱                    │
          ╲ EXIST ? ╱                     │
           ╲  Y   ╱                       │
  S3        ╱   ╲                         │
          ╱       ╲        N              │
        ◇ RESOLUTION ◇──────────────┐     │
         ╲ OF BITMAPPED            ╱ │     │
          ╲ GRAPHICS OVER 300DPI? ╱  │     │
           ╲   Y   ╱                 │     │
```

| S4 | S7 |
|----|----|
| SET RESOLUTION FLAG = 0 | SET RESOLUTION FLAG = 1 |

| S5 | S8 |
|----|----|
| FIGURE CONSERVING GRADATION PIXEL DATA GENERATE (600 DPI) | FIGURE CONSERVING GRADATION PIXEL DATA GENERATE (300 DPI) |

| S6 | S9 |
|----|----|
| FIGURE CONSERVING BITMAP PROCESS AND PRINT (600 DPI) | FIGURE CONSERVING BITMAP PROCESS AND PRINT (300 DPI) |

# Fig.19

```
                    START

              RECEIVE DATA OF ONE
              PAGE FROM HOST          S11

    S12

              BITMAPPED                  N
              GRAPHICS EXIST ?

                    Y

    S13

              RESOLUTION                 N
         OF BITMAPPED GRAPHICS
              OVER 300 DPI ?

                    Y

    S14

              MEMORY AREA
          ENOUGH FOR 600 DPI            N
         GRADATION REPRESENTATION
                EXIST ?

    S15         Y                   S18

    SET RESOLUTION FLAG = 0         SET RESOLUTION FLAG = 1

    S16                             S19

    FIGURE CONSERVING              FIGURE CONSERVING
    GRADATION PIXEL DATA           GRADATION PIXEL DATA
    GENERATE (600 DPI)             GENERATE (300 DPI)

    S17                             S20

    FIGURE CONSERVING              FIGURE CONSERVING
    BITMAP PROCESS AND             BITMAP PROCESS AND
    PRINT (600 DPI)                PRINT (300 DPI)
```

# Fig.20 PRIOR ART

Fig.21 PRIOR ART

# Fig.22

**PRIOR ART**

1/1200 INCH

1/1200 INCH

| PIXEL (n-1:m-1) | PIXEL (n:m-1) | PIXEL (n+1:m-1) |
| PIXEL (n-1:m) | PIXEL (n:m) | PIXEL (n+1:m) |
| PIXEL (n-1:m+1) | PIXEL (n:m+1) | PIXEL (n+1:m+1) |

GRAPHICS

| Y GRADATION VALUE 8 BIT | M GRADATION VALUE 8 BIT | C GRADATION VALUE 8 BIT |

24 BIT PACK FORM

# Fig.23 *PRIOR ART*

EP 1 315 122 A2

```
                                                    6              5
                      ┌─────────────────┐      ┌──────────────┐
              61 ╮    │ MEMORY ADDRESS  │      │  INTERNAL    │
                      │   CALCULATING   │      │  GRADATION   │
                      │     MEANS       │──────│ GRAPHICS DATA│
                      └─────────────────┘      │   MEMORY     │
            62 ╮                               │              │
      ┌─────────────────┐       READ OUT       │              │
      │ PIXEL BUFFER    │◄─────────────────────│              │
      │                 │                      └──────────────┘
PRINT │                 │
COORDINATES │           │
(x,y)─────► │ ┌─────────┐│                              64:COMPARATOR
      │     │GRADATION ││                          ┌──┐
      │     │VALUE YMC ││─────────────────────────►│  │
      │     └─────────┘│                          │  │
      └─────────────────┘                         │  │
                                                  │  │──► REPRESENTATION
                63 ╮                              │  │     BIT VALUE
          ┌─────────────┐                         │  │
          │  DITHERED   │    THRESHOLD VALUE       │  │
          │   SCREEN    │─────────────────────────►│  │
          │ GENERATING  │                          └──┘
          │   MEANS     │
          └─────────────┘
```

## Fig.24

DISCERNIBLE GRADATION NUMBER

—DISCERNED GRADATION NUMBER L

2400DPI
256 GRADATIONS

RESOLUTION DPI

EP 1 315 122 A2